# EUROPÄISCHE PATENTSCHRIFT

(11) **EP 0 901 324 B1**
(45) Veröffentlichungstag und Bekanntmachung des Hinweises auf die Patenterteilung: **20.11.2002**
(21) Anmeldenummer: 97926901.6
(22) Anmeldetag: 06.06.1997
(51) Int. Cl.: A21C 15/02

(54) **VERFAHREN UND ANLAGEN ZUM HERSTELLEN VON GEFÜLLTEN WAFFELBLÖCKEN**
METHOD AND INSTALLATION FOR MANUFACTURING FILLED WAFER BLOCKS
PROCEDE ET INSTALLATIONS POUR LA PREPARATION DE BLOCS DE GAUFRES FOURRES

(30) Priorität: 07.06.1996 AT 98396
(43) Veröffentlichungstag der Anmeldung: 17.03.1999
(73) Patentinhaber: FRANZ HAAS WAFFELMASCHINEN-INDUSTRIE AKTIENGESELLSCHAFT, 1210 Wien (AT)
(72) Erfinder: HAAS, Franz, Sen., A-1210 Wien (AT); HAAS, Johann, A-3400 Klosterneuburg (AT); KOLETNIK, Erich, A-3400 Klosterneuburg/Kierling (AT)
(74) Vertreter: Puchberger, Rolf
(86) Internationale Anmeldenummer: AT9700114
(87) Internationale Veröffentlichungsnummer: WO97047204

(56) Entgegenhaltungen:
- AT-A- 373 473
- DE-A- 2 913 042
- DE-B- 1 288 895
- US-A- 2 838 010
- US-A- 2 868 141
- US-A- 3 343 504
- US-A- 4 518 617

## Beschreibung

### Gebiet der Erfindung:

Die Erfindung betrifft die Herstellung von gefüllten Waffeln, wie sie aus der Backwaren-, Waffelbackwaren- bzw. Süßwarenindustrie bekannt sind.

Gefüllte Waffeln sind z.B. große, im Grundriß rechteckige und im Verhältnis zu ihrer Größe niedrige Waffelblöcke, die an ihrer Oberseite und an ihrer Unterseite jeweils von einem ebenen, rechteckigen Waffelblatt und/oder von einem mit Ausbuchtungen versehenen, rechteckigen Waffelblatt begrenzt und zwischen ihren Waffelblättern mit Streichmasse gefüllt sind. Die großen gefüllten Waffelblöcke werden in kleine gefüllte Waffeln zerteilt, die entweder kleine rechteckige Waffelstücke oder jeweils einer Ausbuchtung des Waffelblockes entsprechende kleine, gefüllte Hohlwaffeln darstellen.

### Stand der Technik:

Aus der Backwaren-, Waffelbackwaren- bzw. Süßwarenindustrie sind große, im Grundriß rechteckige und im Verhältnis zu ihrer Größe niedrige gefüllte Waffelblöcke bekannt. Diese bestehen aus großen und im Verhältnis zu ihrer Größe dünnen Waffelblättern und zwischen den Waffelblättern liegenden Streichmasseschichten. Diese Waffelblöcke sind jeweils an ihrer Oberseite von einem obersten Waffelblatt und an ihrer Unterseite von einem untersten Waffelblatt begrenzt. Diese Waffelblöcke werden in kleine rechteckige Waffelstücke oder in kleine, jeweils einer Ausbuchtung entsprechende Hohlkörper zerteilt.

Die nachfolgend als "ebene Waffelblöcke" bezeichneten Waffelblöcke enthalten jeweils zwei oder mehrere ebene, rechteckige Waffelblätter und eine oder mehrere Streichmasseschichten. Die Höhe dieser Waffelblöcke entspricht jeweils der Höhe der aus ihnen herzustellenden, kleinen gefüllten Waffelstücke. Die Länge und Breite dieser Waffelblöcke entspricht jeweils einem Vielfachen der Länge und Breite der kleinen gefüllten Waffelstücke.

Die nachfolgend als "mit Ausbuchtungen versehene Waffelblöcke" bezeichneten Waffelblöcke werden auch als sogenannte "gefüllte Hohlwaffelblöcke" bezeichnet. Bei diesen Waffelblöcken sind zwei ebene, rechteckige Waffelblätter, von denen zumindest eines an seiner Rückseite vorspringende Ausbuchtungen besitzt, an ihren Vorderseiten durch eine Streichmasseschicht untereinander verbunden. Zwischen den beiden Waffelblättern befinden sich den Ausbuchtungen entsprechende Hohlräume, die von zwei einander gegenüberliegenden Teilbereichen der Waffelblätter begrenzt werden und zumindest teilweise mit Streichmasse gefüllt sind. Jeder mit Ausbuchtungen versehene Waffelblock enthält mehrere kleine, nebeneinander angeordnete und seitlich miteinander verbundene, gefüllte Hohlkörper. Jeder dieser Hohlkörper besteht aus zwei Körperteilen, die einander zur hohlen Gestalt des betreffenden Hohlkörpers ergänzen und von einander gegenüberliegenden Teilbereichen der Waffelblätter gebildet werden. Die Gestalt dieser Körperteile entspricht jeweils der Gestalt des betreffenden ebenen oder mit einer Ausbuchtung versehenen Teilbereiches des jeweiligen Waffelblattes. Der gefüllte Hohlwaffelblock wird zwischen seinen Ausbuchtungen in kleine gefüllte Hohlwaffeln zerteilt, die jeweils einen einzelnen kleinen Hohlkörper umfassen, der zumindest teilweise mit Streichmasse gefüllt ist und eine aus gebackenem Waffelteig bestehende äußere Hülle besitzt. Die äußere Form dieser kleinen Hohlkörper bzw. dieser kleinen Hohlwaffeln kann beispielsweise jeweils die Gestalt von ganzen oder halben Kugeln, Zylindern, Quadern, Eicheln, Walnüssen, Haselnüssen, Pralinen, etc. aufweisen.

Die kleinen gefüllten Waffelstücke und die kleinen gefüllten Hohlkörper werden im industriellen Maßstab zumeist in kontinuierlich arbeitenden und auf das jeweilige Endprodukt ausgerichteten Produktionslinien hergestellt, innerhalb der die großen rechteckigen Waffelblöcke ein Zwischenprodukt darstellen, das in einem Blockbildner aus Streichmasse und rechteckigen Waffelblättern hergestellt wird. Die Waffelblöcke werden in der jeweiligen Produktionslinie zum Verfestigen der Streichmasse gekühlt und später in die kleinen gefüllten Waffelstücke bzw. in die kleinen gefüllten Hohlkörper zerteilt.

Die rechteckigen Waffelblätter werden in kontinuierlich arbeitenden Waffelbacköfen bzw. Waffelbackautomaten hergestellt, deren maximale Produktionskapazität einem Vielfachen der Verarbeitungskapazität der bekannten Blockbildner entspricht. Die im Waffelbackofen bzw. Waffelbackautomaten aus einem flüssigen, hauptsächlich aus Weizenmehl und Wasser bestehenden Waffelteig hergestellten Waffelblätter werden in der jeweiligen Produktionslinie abgekühlt oder abkühlen gelassen und dann zu einer Creme-Auftragsvorrichtung und weiter zum Blockbildner transportiert. Die Waffelblätter besitzen eine knusprige, spröde und leicht zerbrechliche Konsistenz mit einem Feuchtigkeitsgehalt von maximal 1 - 4 Gew.-%.

Bei der Herstellung von großen zweilagigen, an der Oberseite und an der Unterseite mit Ausbuchtungen versehenen Waffelblöcken ist es bekannt, die mit Ausbuchtungen versehenen beschichteten Waffelblätter auf einer Transportvorrichtung liegend zu einem Blockbildner zu transportieren, der die beschichteten Waffelblätter paarweise mit ihren beschichteten Seiten zueinanderklappt und dabei zu zweilagigen Waffelblöcken zusammenfügt, die auf der Transportvorrichtung abgelegt und von dieser abtransportiert werden. Der bekannte Blockbildner besteht aus einer unterhalb der Transportebene der Transportvorrichtung angeordneten Klappvorrichtung, deren Klappelemente die beiden Waffelblätter eines Waffelblockes von der Transportvorrichtung abheben und oberhalb der Transportvorrichtung zueinanderschwenken. Nach der Blockbildung werden die Klappelemente wieder auseinandergeschwenkt und dabei der Waffelblock auf der Transportvorrichtung abgelegt. Der Waffelblock wird aus dem Arbeitsbereich der Klappvorrichtung abtransportiert und deren Klappelemente werden unter die Transportebene abgesenkt. Wenn der Arbeitsbereich der Klappvorrichtung wieder frei ist, werden die beiden Waffelblätter des nächsten Waffelblockes in den Arbeitsbereich der Klappvorrichtung transportiert und dort angehalten. Jetzt wird die Klappvorrichtung wieder in Aktion gesetzt und der nächste Waffelblock gebildet. Der Arbeitsrhythmus der Klappvorrichtung und die Pausen zwischen zwei aufeinanderfolgenden Blockbildungen sind auf die paarweise und intermittierende Anlieferung der Waffelblätter abgestimmt und werden von der Größe der jeweiligen Waffelblätter und der Schwere und Konsistenz ihrer Streichmasseschichten beeinflußt. Um die Auswirkungen der beim Zueinanderklappen der Waffelblätter entstehenden Massenträgheitskräfte auf die Waffelblätter und ihre Streichmasseschichten in Grenzen zu halten, wird die Bewegungsgeschwindigkeit der Klappelemente mit zunehmender Größe der Waffelblätter und zunehmender Schwere der Streichmasseschichten zunehmend verringert, was zwangsläufig zu einem längeren Arbeitstakt der Klappvorrichtung und zu längeren Pausen zwischen aufeinanderfolgenden Blockbildungen führt. Die mit dem als Klappvorrichtung ausgebildeten Blockbildner erzielbare Kapazität bei der Verarbeitung der Waffelblätter zu Waffelblöcken nimmt daher mit zunehmender Größe der Waffelblätter und zunehmender Schwere der Streichmasseschichten zwangsläufig ab. Mehrlagige Waffelblöcke können mit einem als Klappvorrichtung ausgebildeten Blockbildner nicht hergestellt werden.

Bei der Herstellung von großen zwei- oder mehrlagigen, ebenen Waffelblöcken ist es bekannt, die ebenen Waffelblätter einem Blockbildner zuzuführen, der die bei ihm nacheinander in einer unteren Ebene ankommenden Waffelblätter einzeln in eine obere Ebene anhebt und an seiner Oberseite zu einem Waffelblock zusammenfügt, der von der Oberseite des Blockbildners abtransportiert und anschließend auf eine vorgegebene Höhe kalibriert wird. Dieser Blockbildner hebt jedes beschichtete Waffelblatt aus der unteren Ebene an und drückt es mit seiner beschichteten Oberseite von unten an die unbeschichtete Unterseite eines in der oberen Ebene befindlichen Waffelblattes an. Im Blockbildner liegt jedes Waffelblatt auf bogenförmigen, sich von der unteren Ebene zur oberen Ebene bewegenden Halteorganen auf, die von den in die Bewegungsbahn der Waffelblätter ragenden Abschnitten zweier gegensinnig rotierender, drahtförmiger Schraubenbahnen gebildet werden, deren Drehachsen außerhalb der Bewegungsbahn der Waffelblätter angeordnet sind. Die bogenförmigen Halteorgane drücken von unten gegen die Unterseite des Waffelblattes und unterstützen dieses nur linienförmig. Bei diesem Blockbildner sind die Durchmesser und die gegenseitigen Abstände der drahtförmigen Schraubenbahnen auf das Format der Waffelblätter abgestimmt und nehmen mit zunehmender Größe der Waffelblätter ebenfalls zu. Bei großen Waffelblättern mit schweren Streichmasseschichten führt dies zu einer erhöhten Bruchgefahr für die beschichteten Waffelblätter während der Blockbildung.

Bei den Waffelbacköfen, in denen die zu Waffelblöcken zu verarbeitenden Waffelblätter hergestellt werden, geht der Trend zu immer größeren Formaten der Waffelblätter und zu immer größeren Produktionskapazitäten der Waffelbacköfen mit immer kürzeren Taktzeiten für den Ausstoß der gebackenen Waffelblätter. Vor wenigen Jahren war ein Waffelblattformat von 230 mm X 460 mm das Maximum. Heute ist ein Format von 330 mm X 700 mm fast schon die Regel und ein Ende dieser Entwicklung ist noch nicht abzusehen. Dieser Trend macht es erforderlich in den an die Waffelbacköfen jeweils anschließenden Produktionslinien die Taktzeiten zu verkürzen und bei den in diese Produktionslinien integrierten Anlagenteilen zum Beschichten der Waffelblätter, zum Verarbeiten der Waffelblätter zu Waffelblöcken, zum Verarbeiten der Waffelblöcke zu kleinen Waffelstücken bzw. kleinen Hohlkörpern, zum Verarbeiten der kleinen Waffelstücken bzw. kleinen Hohlkörper, etc. jeweils die Verarbeitungskapazitäten zu steigern.

Maschinen zum Herstellen von gefüllten, runden Doppelkeksen aus maximal handtellergroßen, relativ dicken, festen Einzelkeksen sind aus US-A-2 868 141 und DE-B-1 288 895 bekannt.

### Zusammenfassung der Erfindung:

Eine Aufgabe der Erfindung ist es, bei der Herstellung von gefüllten Waffelblöcken, insbesonders bei der Herstellung von gefüllten Hohlwaffelblöcken, die Blockbildung zu verbessern.

Eine weitere Aufgabe der Erfindung ist es, die Blockbildung für große Waffelblätter, die mit dicken Streichmasseschichten und schweren Streichmassen beschichtet sind, zu erleichtern.

Zur Lösung dieser Aufgabe schlägt die Erfindung ein Verfahren zum aufeinanderfolgenden Herstellen von zweilagigen, gefüllten Waffelblöcken vor, die an ihrer Oberseite von einem oberen Waffelblatt und an ihrer Unterseite von einem unteren Waffelblatt begrenzt werden und zwischen ihren Waffelblättern mit Streichmasse gefüllt sind. Dieses Verfahren ist erfindungsgemäß dadurch gekennzeichnet, daß die für die unteren Waffelblätter der Waffelblöcke vorgesehenen Waffelblätter nacheinander als einlagige Vorblöcke in einer unteren Ebene einem Stapelort horizontal zugeführt werden, daß die für die oberen Waffelblätter der Waffelblöcke vorgesehenen Waffelblätter nacheinander als obere Waffelblätter in einer oberen Ebene dem Stapelort horizontal zugeführt werden, und daß jedes obere Waffelblatt aus der oberen Ebene entnommen, in einer geführten Bewegung mit seiner Oberseite nach unten umgedreht und mit einem Vorblock zu einem gefüllten Waffelblock zusammengefügt wird, bevor das nächste obere Waffelblatt aus der oberen Ebene entnommen, in einer geführten Bewegung mit seiner Oberseite nach unten umgedreht und mit dem nächsten Vorblock zum nächsten gefüllten Waffelblock zusammengefügt wird.

Zum aufeinanderfolgenden Herstellen von zumindest dreilagigen, gefüllten Waffelblöcken wird erfindungsgemäß vorgeschlagen, daß die für die untersten Waffelblätter der Waffelblöcke vorgesehenen Waffelblätter auf einer unteren Ebene als einlagige Vorblöcke einem Stapelort horizontal zugeführt werden, daß die für die übrigen Waffelblätter der Waffelblöcke vorgesehenen Waffelblätter als an ihrer Oberseite beschichtete, obere Waffelblätter auf einer oberen Ebene dem Stapelort horizontal zugeführt werden, und daß für jeden einzelnen Waffelblock zuerst ein oberes Waffelblatt aus der oberen Ebene entnommen, in einer geführten Bewegung mit seiner beschichteten Oberseite nach unten umgedreht und mit einem einlagigen Vorblock zu einem zweilagigen Vorblock zusammengefügt wird, bevor dann für jede weitere Waffelblattlage des Waffelblockes jeweils ein weiteres oberes Waffelblatt aus der oberen Ebene entnommen, in einer geführten Bewegung mit seiner beschichteten Oberseite nach unten umgedreht und mit dem vorangehend gebildeten Vorblock zusammengefügt wird.

Das erfindungsgemäße Verfahren erlaubt eine deutliche Steigerung der Kapazität bei der Herstellung von gefüllten Waffelblöcken. Dies gilt sowohl für Waffelblöcke, die nur aus beschichteten Waffelblättern zusammengefügt werden, als auch für Waffelblöcke, die aus beschichteten und unbeschichteten Waffelblättern zusammengefügt werden. Die je nach Anzahl der Waffelblattlagen der fertigen Waffelblöcke einphasige oder mehrphasige Blockbildung kann parallel zur Zufuhr der Waffelblätter zum Stapelort und parallel zum Transport der Vorblöcke durch die untere Ebene erfolgen. Die Taktzeiten für die Zufuhr der Waffelblätter zum Stapelort können deutlich verkürzt und der Waffelblattdurchsatz am Stapelort deutlich erhöht werden. Die Waffelblätter können dem Stapelort kontinuierlich zugeführt und die fertigen gefüllten Waffelblöcke kontinuierlich vom Stapelort abtransportiert werden. Die Waffelblöcke werden jeweils auf ihren untersten Waffelblättern gebildet, während diese in der unteren Ebene weiterbewegt werden. Die geführte Bewegung der oberen Waffelblätter erlaubt eine deutliche Erhöhung ihrer Bewegungsgeschwindigkeit entlang der von ihnen zu durchlaufenden Bewegungsbahn, ohne daß sich die dabei entstehenden Massenkräfte bei den beschichteten Waffelblättern nachteilig auf deren Streichmassen auswirken. Die Massenkräfte werden durch die Gestalt dieser Bewegungsbahn bestimmt und können durch Veränderungen dieser Gestalt gezielt gesteuert und beeinflußt werden.

Für die Herstellung von zweilagigen, gefüllten Hohlwaffelblöcken wird erfindungsgemäß vorgechlagen, daß in der unteren Ebene an der Unterseite mit Ausbuchtungen versehene, beschichtete Waffelblätter und in der oberen Ebene an der Unterseite mit Ausbuchtungen versehene, unbeschichtete Waffelblätter zugeführt werden und daß jeweils ein an der Unterseite mit

Ausbuchtungen versehenes, unbeschichtetes Waffelblatt auf den Kopf gestellt und mit einem an der Unterseite mit Ausbuchtungen versehenen, beschichteten Waffelblatt zu einem zweilagigen, gefüllten Hohlwaffelblock zusammengefügt wird, bevor das nächste, an der Unterseite mit Ausbuchtungen versehene, unbeschichtete Waffelblatt aus der oberen Ebene entnommen und auf den Kopf gestellt wird.

Für die Herstellung von zweilagigen, gefüllten Waffelblöcken können dem Stapelort beschichtete Waffelblätter als einlagige Vorblöcke und unbeschichtete Waffelblätter als obere Waffelblätter, oder unbeschichtete Waffelblätter als einlagige Vorblöcke und beschichtete Waffelblätter als obere Waffelblätter, oder beschichtete Waffelblätter sowohl als einlagige Vorblöcke als auch als obere Waffelblätter zugeführt werden.

Gemäß einem weiteren Merkmal der Erfindung kann jedes obere Waffelblatt zuerst umgedreht und dann in einer geführten Bewegung abgesenkt werden.

Gemäß einem weiteren Merkmal der Erfindung kann jedes obere Waffelblatt in einer geführten Bewegung zur unteren Ebene abgesenkt und während dieses Absenkens umgedreht werden.

Gemäß einem weiteren Merkmal der Erfindung kann jedes umgedrehte, obere Waffelblatt mit der Bewegung eines Vorblockes synchronisiert werden, bevor es mit diesem zu einem gefüllten Waffelblock zusammengefügt wird.

Gemäß einem weiteren Merkmal der Erfindung kann das umgedrehte, obere Waffelblatt angehalten werden, bevor es mit dem Vorblock zu einem gefüllten Waffelblock zusammengefügt wird.

Gemäß einem weiteren Merkmal der Erfindung kann das obere Waffelblatt dem Vorblock in einer geführten Bewegung nachgeführt und dann mit dem Vorblock synchron mitbewegt werden, während es mit diesem zu einem gefüllten Waffelblock zusammengefügt wird.

Gemäß einem weiteren Merkmal der Erfindung kann der Vorblock dem umgedrehten, oberen Waffelblatt nachgeführt und dann mit dem umgedrehten, oberen Waffelblatt synchron mitbewegt werden, während er mit diesem zu einem gefüllten Waffelblock zusammengefügt wird.

Gemäß einem weiteren Merkmal der Erfindung kann jedes umgedrehte, obere Waffelblatt in einer geführten Bewegung auf einen Vorblock aufgesetzt und gegen diesen nach unten angedrückt werden, um das umgedrehte, obere Waffelblatt mit dem Vorblock zu einem gefüllten Waffelblock zusammenzufügen.

Gemäß einem weiteren Merkmal der Erfindung kann jeder Vorblock zu einem umgedrehten, oberen Waffelblatt angehoben und gegen dieses nach oben angedrückt werden, um den Vorblock mit dem umgedrehten, oberen Waffelblatt zu einem gefüllten Waffelblock zusammenzufügen.

Gemäß einem weiteren Merkmal der Erfindung kann jedes obere Waffelblatt zentriert werden, bevor es aus der oberen Ebene entnommen wird.

Gemäß einem weiteren Merkmal der Erfindung kann jedes obere Waffelblatt erst dann aus der oberen Ebene entnommen werden, wenn die Position des zugehörigen Vorblockes in der unteren Ebene mittels einer Sensorüberwachung registriert worden ist.

Weiters wird eine Anlage zum Herstellen von gefüllten Waffelblöcken vorgeschlagen, die an ihrer Oberseite von einem obersten Waffelblatt und an ihrer Unterseite von einem untersten Waffelblatt begrenzt werden und zwischen ihren Waffelblättern mit Streichmasse gefüllt sind, Diese Anlage ist erfindungsgemäß dadurch gekennzeichnet, daß eine untere, horizontale Transportvorrichtung vorgesehen ist, die in einer unteren Ebene einlagige Vorblöcke einem Stapelort zuführt und fertige Waffelblöcke aus dem Stapelort abtransportiert, daß oberhalb der unteren Transportvorrichtung eine obere, horizontale Transportvorrichtung vorgesehen ist, die vor dem Stapelort endet und obere Waffelblätter in einer oberen Ebene dem Stapelort zuführt, und daß dem Stapelort ein die einzelnen Waffelblöcke jeweils in einer oder mehreren aufeinanderfolgenden Blockbildungsphasen bildender Blockbildner zugeordnet ist, der einen an seiner

Vorderseite mit einer Haltevorrichtung für die oberen Waffelblätter versehenen, mehrachsig räumlich frei bewegbaren Übergabekopf besitzt, der für jede einzelne Blockbildungsphase, während der ein oberes Waffelblatt mit seiner Oberseite nach unten umgedreht, zur unteren Transportvorrichtung abgesenkt und mit einem Vorblock zu einem gefüllten Waffelblock zusammengefügt wird, aus einer dem Ende der oberen Transportvorrichtung benachbarten Aufnahmestellung mit nach oben weisender Vorderseite in eine der unteren Transportvorrichtung benachbarte Abgabestellung mit nach unten weisender Vorderseite räumlich frei bewegbar ist.

Diese Anlage erlaubt eine deutliche Steigerung der Kapazität bei der Herstellung von gefüllten Waffelblöcken aus beschichteten Waffelblättern, oder aus beschichteten und unbeschichteten Waffelblättern. Die einphasige oder mehrphasige Blockbildung kann parallel zum Transport der Waffelblätter erfolgen. Diese Anlage ermöglicht einen kontinuierlichen Betrieb, bei dem die obere und untere Transportvorrichtung die Waffelblätter dem Stapelort kontinuierlich zuführen und die untere Transportvorrichtung die auf ihr gebildeten gefüllten Waffelblöcke kontinuierlich vom Stapelort abtransportiert. Der Übergabekopf bewegt jeweils das von ihm gehaltene obere Waffelblatt in einer geführten Bewegung von seiner Aufnahmestellung in seine Abgabestellung, dreht es dabei um und senkt es zum jeweiligen Vorblock hin ab. Die geführte Bewegung des Übergabekopfes erlaubt eine deutliche Erhöhung seiner Bewegungsgeschwindigkeit entlang der von ihm zu durchlaufenden Bewegungsbahn, ohne daß sich die dabei entstehenden Massenkräfte bei den beschichteten Waffelblättern nachteilig auf die Streichmasse eines vom Übergabekopf gehaltenen Waffelblattes auswirken. Die Massenkräfte werden durch die Gestalt dieser Bewegungsbahn bestimmt und können durch Veränderungen dieser Gestalt gezielt gesteuert und beeinflußt werden.

Gemäß einem weiteren Merkmal der Erfindung kann die Haltevorrichtung des Übergabekopfes ein mit den unbeschichteten Unterseiten der oberen Waffelblätter in Eingriff bringbares Luftkissen besitzen, das zum Erfassen eines oberen Waffelblattes mit Unterdruck beaufschlagbar und zum Abgeben eines oberen Waffelblattes mit Überdruck beaufschlagbar ist Diese Ausbildung ermöglicht eine gleichmäßige Verteilung der während der Blockbildung von der Haltevorrichtung auf das obere Waffelblatt auszuübenden Halte- bzw. Druckkräfte über das gesamte obere Waffelblatt. Dies ist bei großen Waffelblättern von Vorteil, die mit vielen, eng nebeneinander liegenden Ausbuchtungen versehen sind. Ebenso bei sehr großen Waffelblättern, die mit sehr schweren Streichmasseschichten beschichtet sind. Das in die Haltevorrichtung integrierte Luftkissen sorgt für eine großflächige Stützung des jeweiligen Waffelblattes während seiner geführten Bewegung durch den Übergabekopf. Dadurch können auch mit schweren Cremen beschichtete Waffelblätter ohne Bruchgefahr für das jeweilige Waffelblatt zu Waffelblöcken verarbeitet werden.

Gemäß einem weiteren Merkmal der Erfindung kann der Übergabekopf einen über seine Vorderseite vorstehenden, vorderen Anschlag besitzen, der am vorderen Rand des Übergabekopfes angeordnet ist und in der Abgabestellung des Übergabekopfes von oben über die Vorderkante eines auf der unteren Transportvorrichtung liegenden Vorblockes nach unten vorsteht.

Diese Ausbildung erleichtert die Synchronisation der Bewegung des vom Übergabekopf getragenen, oberen Waffelblattes mit der Bewegung des dem Übergabekopf auf der unteren Transportvorrichtung nacheilenden Vorblockes.

Gemäß einem weiteren Merkmal der Erfindung kann der Übergabekopf einen über seine Vorderseite vorstehenden, hinteren Anschlag besitzen, der am hinteren Rand des Übergabekopfes angeordnet ist und in der Abgabestellung des Übergabekopfes von oben über die Hinterkante eines auf der unteren Transportvorrichtung liegenden Vorblockes nach unten vorsteht. Diese Ausbildung erleichtert die Synchronisation der Bewegung des auf der unteren Transportvorrichtung liegenden Vorblockes mit der Bewegung des ihm nacheilenden, vom Übergabekopf getragenen, oberen Waffelblattes.

Gemäß einem weiteren Merkmal der Erfindung kann unterhalb der unteren Transportebene ein der Abgabestellung des Übergabekopfes zugeordneter, vertikal auf und ab bewegbarer Hubtisch vorgesehen sein, der eine zur unteren Transportebene parallele, nach oben weisende Auflagefläche für die Vorblöcke und einen zur unteren Transportebene senkrechten Anschlag für die Vorderkanten der Vorblöcke besitzt. Diese Ausbildung erlaubt ein von der Übergabebewegung des Übergabekopfes unabhängiges Zusammenfügen der vom Übergabekopf gehaltenen Waffelblätter mit dem jeweiligen Vorblock.

Gemäß einem weiteren Merkmal der Erfindung kann die Übergabevorrichtung als ein der unteren Transportvorrichtung zugeordneter, mehrachsiger Handhabungsautomat ausgebildet sein, der einen um eine vertikale Achse drehbaren und um eine horizontale Achse knickbaren Ausleger mit einem, um eine zur Knickachse senkrechte Achse drehbaren Arm besitzt, an dessen freiem Ende der Übergabekopf angebracht ist.

In weiterer Ausgestaltung der Erfindung wird ein Verfahren zum Herstellen von mehrlagigen gefüllten Waffelblöcken vorgeschlagen, die an ihrer Oberseite von einem obersten Waffelblatt und an ihrer Unterseite von einem untersten Waffelblatt begrenzt werden und zwischen ihren Waffelblättern mit Streichmasse gefüllt sind. Bei diesem Verfahren werden ein an Oberseite und Unterseite unbeschichteter Vorblock des zu bildenden Waffelblockes und zumindest ein beschichtetes Waffelblatt nacheinander in der gleichen Transportebene einem Stapelort zugeführt. Dieses Verfahren ist erfindungsgemäß dadurch gekennzeichnet, daß der Vorblock am Stapelort zumindest einmal in einer geführten Bewegung angehoben und mit seiner unbeschichteten Unterseite mit der beschichteten Oberseite des nächsten, dem Stapelort in der Transportebene zugeführten, beschichteten Waffelblattes zu einem gefüllten Waffelblock zusammengefügt wird.

Zum Herstellen von mehrlagigen gefüllten Waffelblöcken wird erfindungsgemäß vorgeschlagen, daß der Vorblock in einer geführten Bewegung angehoben und mit dem nächsten, in der Transportebene zugeführten, beschichteten Waffelblatt zu einem weiteren Vorblock zusammengefügt wird und daß für jede weitere Waffelblattlage des zu bildenden Waffelblockes jeweils der vorangehend gebildete Vorblock in einer geführten Bewegung angehoben und mit dem nächsten, in der Transportebene zugeführten, beschichteten Waffelblatt zu einem gefüllten Waffelblock zusammengefügt wird.

Dieses Verfahren erlaubt eine deutliche Steigerung der Kapazität bei der Herstellung von gefüllten Waffelblöcken aus beschichteten und unbeschichteten Waffelblättern. Die je nach Anzahl der Waffelblattlagen der fertigen Waffelblöcke einphasige oder mehrphasige Blockbildung kann parallel zur Zufuhr der Waffelblätter zum Stapelort erfolgen, ohne diese zu unterbrechen. Die Blockbildung kann am Stapelort parallel zur Bewegung der dem Stapelort zugeführten Waffelblätter erfolgen. Das geführte Bewegen der Vorblöcke erlaubt eine deutliche Erhöhung ihrer Bewegungsgeschwindigkeit entlang der von ihnen zu durchlaufenden Bewegungsbahn, ohne daß sich die dabei entstehenden Massenkräfte nachteilig auf den jeweiligen Vorblock auswirken. Die Massenkräfte werden durch die Gestalt dieser Bewegungsbahn bestimmt und können durch Veränderungen dieser Gestalt gezielt gesteuert und beeinflußt werden.

Gemäß einem weiteren Merkmal der Erfindung kann zum Zusammenfügen von Vorblock und beschichtetem Waffelblatt jeweils der Vorblock in einer geführten Bewegung von oben auf das beschichtete Waffelblatt aufgesetzt und gegen dieses nach unten angedrückt werden. Bei dieser Verfahrensvariante wird die geführte Bewegung des Vorblockes zum Zusammenfügen von Vorblock und beschichtetem Waffelblatt verwendet, das während des Zusammenfügens in der Transportebene bleibt.

Gemäß einem weiteren Merkmal der Erfindung kann zum Zusammenfügen von Vorblock und beschichtetem Waffelblatt jeweils das beschichtete Waffelblatt aus der Transportebene angehoben und von unten gegen den in einer Haltestellung festgehaltenen Vorblock angedrückt werden. Bei dieser Verfahrensvariante wird das Zusammenfügen von Vorblock und beschichtetem Waffelblatt unabhängig von der geführten Bewegung des Vorblockes ausgeführt, der während des Zusammenfügens in seiner über der Transportebene liegenden Haltestellung bleibt.

Gemäß einem weiteren Merkmal der Erfindung kann der Vorblock mit der Bewegung des nächsten beschichteten Waffelblattes synchronisiert werden, bevor er mit diesem zu einem gefüllten Waffelblock zusammengefügt wird.

Gemäß einem weiteren Merkmal der Erfindung kann der Vorblock angehalten werden, bevor er mit dem beschichteten Waffelblatt zu einem gefüllten Waffelblock zusammengefügt wird.

Gemäß einem weiteren Merkmal der Erfindung kann der Vorblock dem nächsten beschichteten Waffelblatt in einer geführten Bewegung nachgeführt und dann mit dem beschichteten Waffelblatt synchron mitbewegt werden, während er mit diesem zu einem gefüllten Waffelblock zusammengefügt wird.

Gemäß einem weiteren Merkmal der Erfindung kann das nächste beschichtete Waffelblatt dem Vorblock nachgeführt und dann mit diesem synchron mitbewegt werden, während es mit dem Vorblock zu einem gefüllten Waffelblock zusammengefügt wird.

Gemäß einem weiteren Merkmal der Erfindung können zuerst außerhalb des Stapelortes beschichtete und unbeschichtete Waffelblätter paarweise zu zweilagigen, mit Streichmasse gefüllten Waffelblöcken zusammengefügt werden, welche dem Stapelort als Vorblöcke für die zu bildenden Waffelblöcke zugeführt werden. Diese Verfahrensvariante vereinfacht die Blockbildung für große Waffelblätter, die mit dicken Streichmasseschichten und schweren Streichmassen beschichtet sind. Diese Verfahrensvariante sieht bei jedem Waffelblock eine räumliche und zeitliche Trennung der ersten Phase seiner Blockbildung von allen nachfolgenden Phasen seiner Blockbildung vor. Die Herstellung der zweilagigen, mit Streichmasse gefüllten Vorblöcke in der ersten Phasen der Blockbildung kann ebenfalls parallel zum Transport der Waffelblätter zum Stapelort erfolgen.

Gemäß einem weiteren Merkmal der Erfindung können dem Stapelort unbeschichtete Waffelblätter als Vorblöcke für die zu bildenden Warfelblöcke zugeführt werden.

In weiterer Ausgestaltung der Erfindung wird eine Anlage zum Herstellen von gefüllten Waffelblöcken vorgeschlagen, die an ihrer Oberseite von einem obersten Waffelblatt und an ihrer Unterseite von einem untersten Waffelblatt begrenzt werden und zwischen ihren Waffelblättern mit Streichmasse gefüllt sind. Diese Anlage ist erfindungsgemäß dadurch gekennzeichnet, daß eine horizontale Transportvorrichtung vorgesehen ist, die die zu Waffelblöcken zusammenzufügenden Vorblöcke und beschichteten Warfelblätter in einer Transportebene nacheinander einem Stapelort zuführt und die fertigen Waffelblöcke auf der gleichen Transportebene abtransportiert, und daß der Transportvorrichtung am Stapelort ein jeden Waffelblock in einer oder mehreren aufeinanderfolgenden Blockbildungsphasen bildender Blockbildner zugeordnet ist, der einen an seiner nach unten weisenden Vorderseite mit einer Haltevorrichtung für die Vorblöcke versehenen Arbeitskopf besitzt, der gegenüber der Transportvorrichtung in eine Arbeitsstellung zum Erfassen eines Vorblockes absenkbar und für die einzelnen Blockbildungsphasen, bei denen der von der Haltevorrichtung festgehaltene Vorblock angehoben und mit dem nächsten beschichteten Waffelblatt zu einem gefüllten Waffelblock zusammengefügt wird, in geführten Bewegungen in von der Transportvorrichtung unterschiedlich weit entfernte, jeweils einer Blockbildungsphase zugeordnete Arbeitsstellungen bewegbar ist.

Diese Anlage erlaubt eine deutliche Steigerung der Kapazität bei der Herstellung von gefüllten Waffelblöcken aus beschichteten und unbeschichteten Waffelblättern. Die je nach Anzahl der Waffelblattlagen der fertigen Waffelblöcke einphasige oder mehrphasige Blockbildung kann parallel zur Zufuhr der Waffelblätter zum Stapelort erfolgen, ohne diesen zu unterbrechen. Diese Anlage ermöglicht einen kontinuierlichen Betrieb, wobei die Blockbildung am Stapelort parallel zur Bewegung der dem Stapelort zugeführten Waffelblätter erfolgt. Der Arbeitskopf bewegt jeweils den von der Haltevorrichtung erfaßten Vorblock in einer geführten Bewegung zwischen den einzelnen Arbeitsstellungen hin und her. Der Arbeitskopf kann oberhalb der Transportvorrichtung in einer geführten Bewegung vertikal auf und ab bewegt werden oder in einer geführten Bewegung eine in sich geschlossene Bahn durchlaufen. Während der Herstellung eines Waffelblockes steht der Arbeitskopf über seine Haltevorrichtung ständig mit dem obersten Waffelblatt des Waffelblockes im Eingriff.

Gemäß einem weiteren Merkmal der Erfindung kann die Haltevorrichtung des Arbeitskopfes ein mit der unbeschichteten Oberseite eines Vorblockes in Eingriff bringbares Luftkissen besitzt, das zum Erfassen eines Vorblockes mit Unterdruck beaufschlagbar und zum Abgeben des fertigen Waffelblockes mit Überdruck beaufschlagbar ist. Bei dieser Ausbildung greift der Arbeitskopf mit dem Luftkissen seiner Haltevorrichtung am obersten Waffelblatt des Waffelblockes gleichmäßig an und überträgt die während der einzelnen Blockbildungsphasen jeweils auf den entstehenden Waffelblock auszuübenden Halte- bzw. Druckkräfte auf den jeweiligen Vorblock.

Das Luftkissen greift an der gesamten Oberseite des obersten Waffelblattes an. Dies ist bei großen und mit dicken und schweren Streichmasseschichten beschichteten Waffelblättern bzw. bei den aus solchen Waffelblättern gebildeten Vorblöcken von Vorteil.

Gemäß einem weiteren Merkmal der Erfindung kann der Arbeitskopf einen über seine Vorderseite vorstehenden, vorderen Anschlag besitzen, der am vorderen Rand des Arbeitskopfes über einen von der Haltevorrichtung gehaltenen Vorblock nach unten vorsteht und der Vorderkante eines auf der Transportvorrichtung liegenden, beschichteten Waffelblattes zugeordnet ist. Diese Ausbildung erleichtert die Synchronisation der Bewegung des vom Arbeitskopf getragenen Vorblockes mit der Bewegung des ihm nacheilenden, beschichteten Waffelblattes.

Gemäß einem weiteren Merkmal der Erfindung kann der Arbeitskopf einen über seine Vorderseite vorstehenden, hinteren Anschlag besitzen, der am hinteren Rand des Arbeitskopfes über einen von der Haltevorrichtung gehaltenen Vorblock nach unten vorsteht und der Hinterkante eines auf der Transportvorrichtung liegenden, beschichteten Waffelblattes zugeordnet ist. Diese Ausbildung erleichtert die Synchronisation der Bewegung des beschichteten Waffelblattes mit der Bewegung des ihm nacheilenden, vom Arbeitskopf getragenen Vorblockes.

Gemäß einem weiteren Merkmal der Erfindung kann unterhalb der Transportebene ein dem Arbeitskopf zugeordneter, vertikal auf und ab bewegbarer Hubtisch vorgesehen ist, der eine zur Transportebene parallele, nach oben weisende Auflagefläche und einen über die Auflagefläche nach oben vorstehenden, zur Transportebene senkrechten Anschlag besitzt. Diese Ausbildung erlaubt ein von der Arbeitsbewegung des Arbeitskopfes unabhängiges Zusammenfügen des vom Arbeitskopf gehaltenen Vorblockes mit dem jeweiligen beschichteten Waffelblatt.

Gemäß einem weiteren Merkmal der Erfindung kann der Blockbildner als ein der Transportvorrichtung zugeordneter Handhabungsautomat ausgebildet sein, der einen um eine horizontale Achse knickbaren Ausleger besitzt, an dessen freiem Ende der Arbeitskopf angebracht ist.

Gemäß einem weiteren Merkmal der Erfindung kann der den Arbeitskopf tragende Ausleger des Handhabungsautomaten um eine vertikale Achse drehbar sein.

Gemäß einem weiteren Merkmal der Erfindung kann ein dem Blockbildner vorgelagerter Anlagenabschnitt zum Herstellen von zweilagigen, gefüllten Vorblöcken vorgesehen sein, welcher eine oberhalb der Transportvorrichtung angeordnete, obere Transportvorrichtung für die Zufuhr von unbeschichteten Waffelblättern, eine der oberen Transportvorrichtung nachgelagerte Station zum Auflegen der unbeschichteten Waffelblätter auf einzelne, auf der Transportvorrichtung liegende, beschichtete Waffelblätter und eine die beschichteten und unbeschichteten Waffelblätter zu zweilagigen, gefüllten Waffelblöcken zusammenfügende Kalibriervorrichtung umfaßt. Diese Ausbildung ist bei großen, dicke und schwere Streichmasseschichten tragenden Waffelblättern von Vorteil, die zu zweilagigen Vorblöcken zusammengesetzt vom Arbeitskopf des Blockbildners leichter erfaßt werden können.

Nachstehend wird die Erfindung anhand von in den Zeichnungen dargestellten Ausführungsbeispielen von Anlagen zur Herstellung von gefüllten Waffelblöcken näher erläutert.

### Kurze Beschreibung der Zeichnungen:

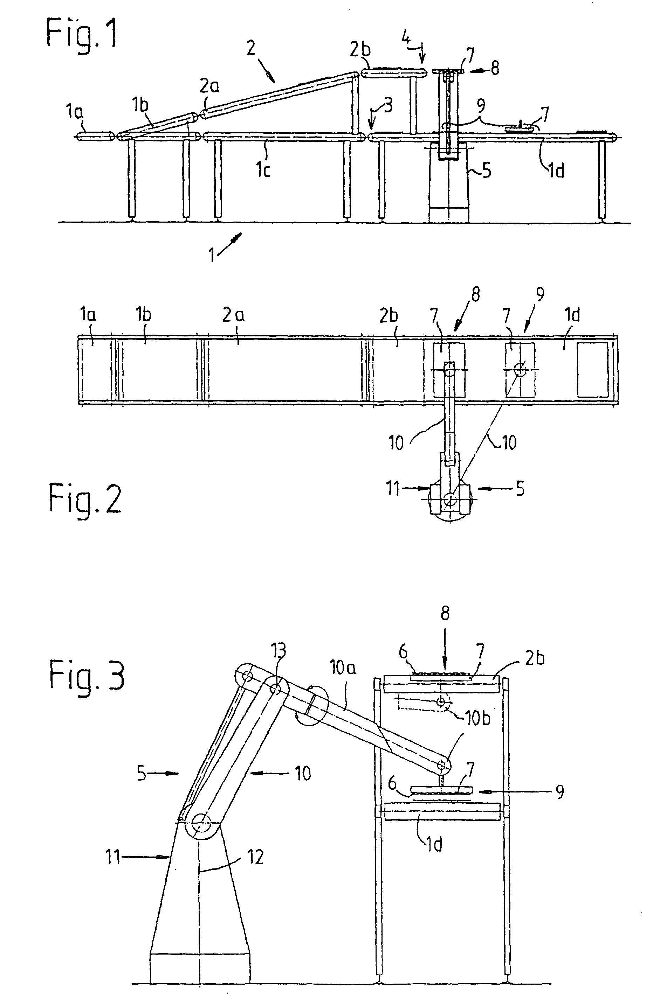

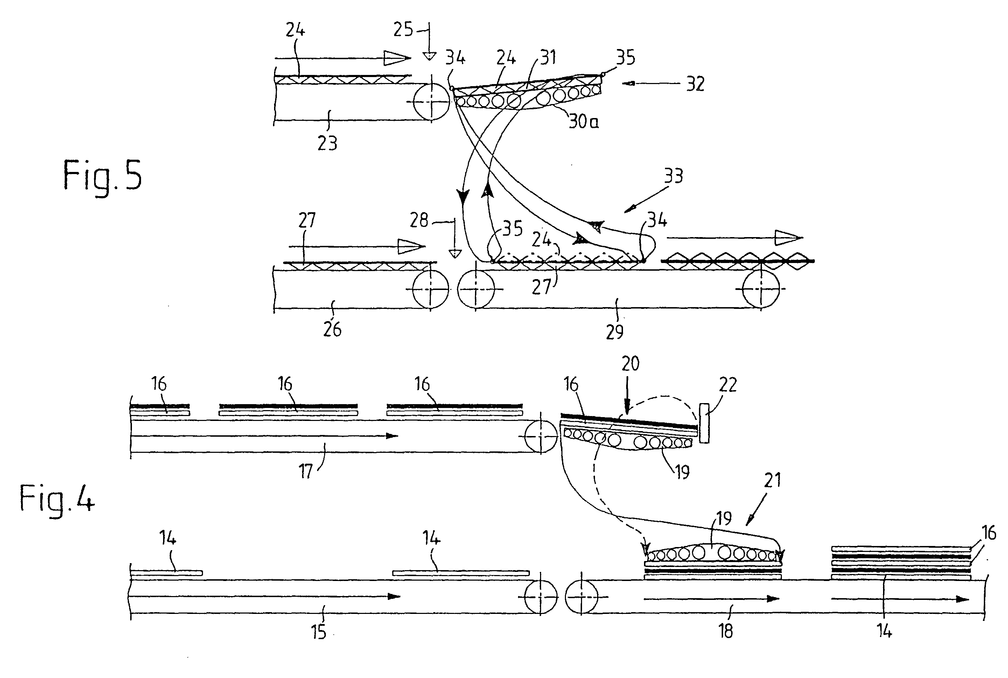

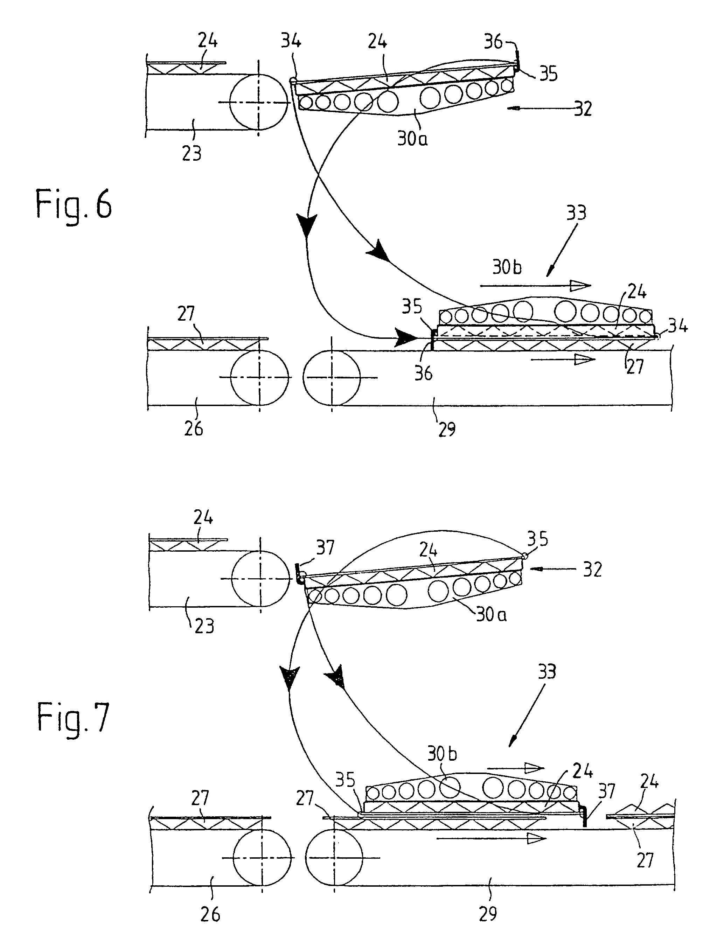

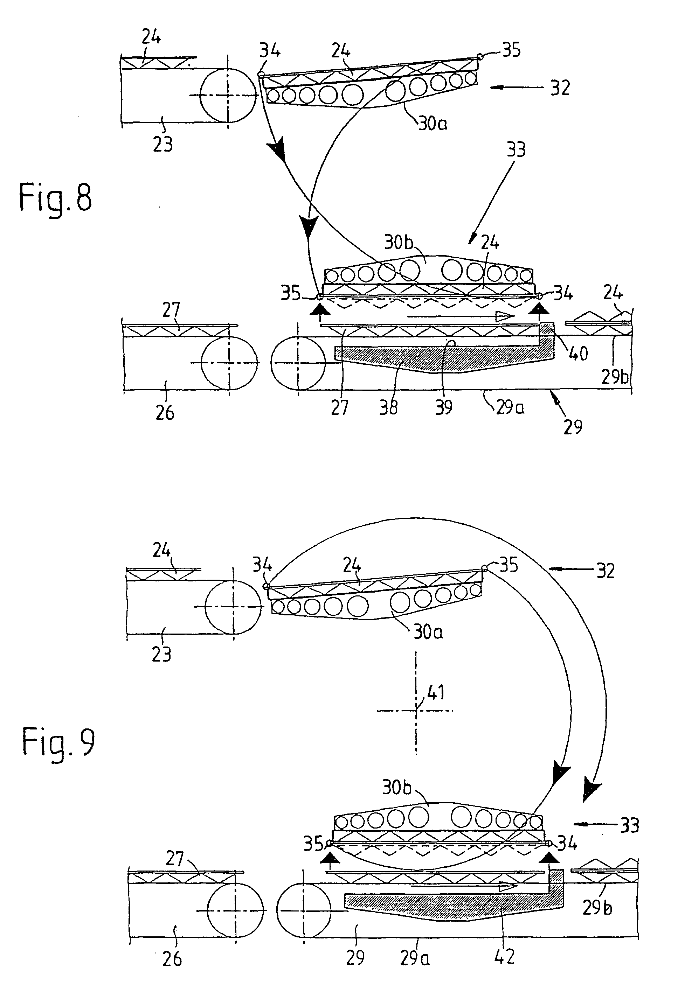

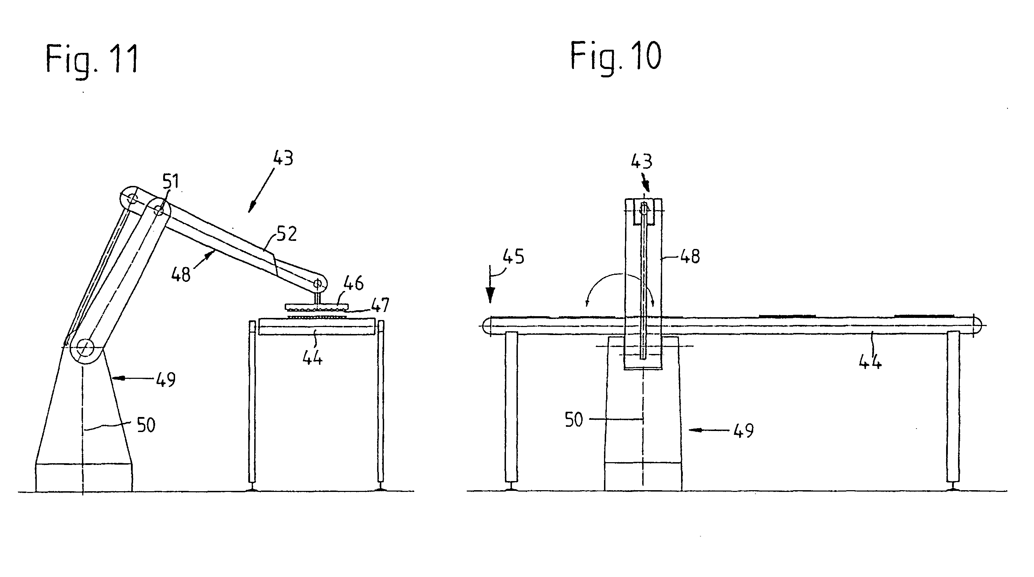

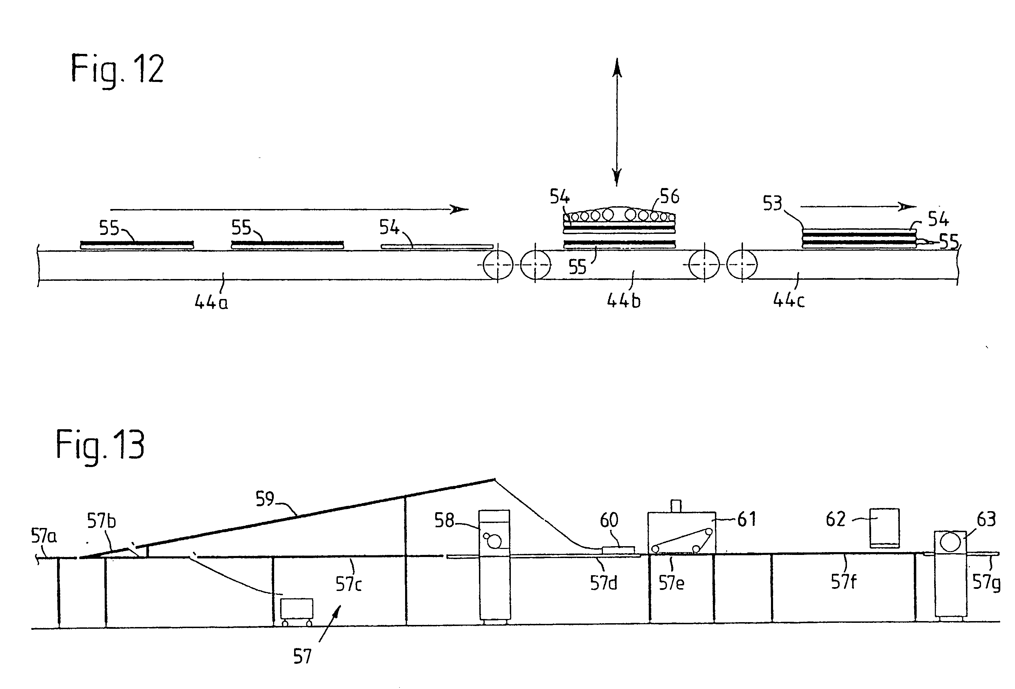

In den Zeichnungen zeigen: Fig. 1 eine Seitenansicht einer Anlage zum Herstellen von gefüllten Waffelblöcken, bei der die Waffelblätter in zwei übereinanderliegenden Ebenen einer Übergabevorrichtung zugeführt werden; Fig. 2 die Anlage gemäß Fig. 1 von oben; Fig. 3 die Anlage gemäß Fig. 1 von vorne; Fig. 4 schematisch eine Seitenansicht einer weiteren Ausführungsform einer Anlage zum Herstellen von gefüllten Waffelblöcken, bei der die Waffelblätter in zwei übereinanderliegenden Ebenen einer Übergabevorrichtung zugeführt werden; Fig. 5 schematisch eine Seitenansicht des Bereiches der Blockbildung einer Anlage zum Herstellen von gefüllten Waffelblöcken, mit den Bewegungsabläufen während einer einphasigen Blockbildung; Fig. 6 schematisch eine Seitenansicht des Bereiches der Blockbildung mit einer weiteren Ausführungsform der Übergabevorrichtung, mit den Bewegungsabläufen während einer einphasigen Blockbildung; Fig. 7 schematisch eine Seitenansicht des Bereiches der Blockbildung mit einer weiteren Ausführungsform der Übergabevorrichtung, mit den Bewegungsabläufen während einer einphasigen Blockbildung; Fig. 8 schematisch eine Seitenansicht des Bereiches der Blockbildung mit einer weiteren Ausführungsform der Übergabevorrichtung und einem der unteren Ebene zugeordneten Hubtisch, mit den Bewegungsabläufen während einer einphasigen Blockbildung; Fig. 9 schematisch eine Seitenansicht des Bereiches der Blockbildung mit einer weiteren Ausführungsform der Übergabevorrichtung und einem der unteren Ebene zugeordneten Hubtisch, mit den Bewegungsabläufen während einer einphasigen Blockbildung; Fig. 10 eine Seitenansicht einer Anlage zum Herstellen von gefüllten Waffelblöcken mit einem Blockbildner, dem die Waffelblätter in einer Ebene zugeführt werden; Fig. 11 die Anlage gemäß Fig. 10 von vorne; Fig. 12 schematisch eine Seitenansicht einer weiteren Anlage zum Herstellen von gefüllten Waffelblöcken mit einem Blockbildner, dem die Waffelblätter in einer Ebene zugeführt werden; und Fig. 13 eine Seitenansicht einer Anlage zum Herstellen von gefüllten Waffelblöcken mit einem Abschnitt zum Herstellen von gefüllten zweilagigen Vorblöcken und einem Abschnitt zum Verarbeiten der Vorblöcke zu mehrlagigen gefüllten Waffelblöcken.

### Beschreibung von Ausführungsbeispielen:

Die Figuren 1 bis 3 zeigen eine Anlage zum Herstellen von gefüllten Waffelblöcken, die in einem ein- oder mehrphasigen Blockbildungsverfahren aus ebenen oder mit Ausbuchtungen versehenen Waffelblättern hergestellt werden.

Die Anlage umfaßt eine, aus mehreren in Transportrichtung aufeinanderfolgenden Transportvorrichtungen bestehende untere Transportvorrichtung 1, die eine untere Transportebene definiert. Auf der ersten Transportvorrichtung 1a werden die Waffelblätter der Anlage zugeführt. Die zweite Transportvorrichtung 1b ist als Transportweiche ausgebildet, welche einen Teil der Waffelblätter als untere Waffelblätter in der unteren Transportebene an die dritte Transportvorrichtung 1c und die übrigen Waffelblätter als obere Waffelblätter an eine oberhalb der dritten Transportvorrichtung 1c angeordnete obere Transportvorrichtung 2 weitergibt.

Die dritte Transportvorrichtung 1c gibt die Waffelblätter in der unteren Transportebene an die vierte Transportvorrichtung 1d weiter, die einem Blockbildner zugeordnet ist und an der ein Sensor 3 vorgesehen ist, der die dem Blockbildner in der unteren Transportebene zuzuführenden Waffelblätter registriert.

Die obere Transportvorrichtung 2 besteht aus einem, von der unteren Transportebene schräg nach oben führenden ersten Abschnitt 2a und einem an diesen anschließenden zweiten Abschnitt 2b, der in einer oberen Transportebene zum Blockbildner führt und vor dem Blockbildner endet. Am Ende der oberen Transportvorrichtung 2 ist ein Sensor 4 angeordnet, der die dem Blockbildner in der oberen Transportebene zuzuführenden Waffelblätter registriert.

Der Blockbildner der Anlage ist als Übergabevorrichtung 5 ausgebildet, die einen Übergabekopf 7 trägt, der an seiner Vorderseite mit einer Haltevorrichtung 6 für die oberen Waffelblätter versehen ist. Die Haltevorrichtung 6 umfaßt ein an eine Druckluftleitung angeschlossenes Luftkissen, das zum Erfassen und Festhalten der oberen Waffelblätter mit Unterdruck und zum Abgeben und Loslassen der oberen Waffelblätter mit Überdruck beaufschlagt werden kann.

Der Übergabekopf 7 wird von der Übergabevorrichtung 5 zwischen einem oberen Aufnahmebereich, der nahe dem vorderen Ende der oberen Transportvorrichtung 2 liegt, und einem unteren Abgabebereich, der über der vierten Transportvorrichtung 1d liegt, hin und her bewegt. Im Aufnahmebereich ist der Übergabekopf 7 mit seiner Vorderseite nach oben gewandt und befindet sich in seiner Aufnahmestellung 8. Im Abgabebereich ist der Übergabekopf 7 mit seiner Vorderseite nach unten gewandt und befindet sich in seiner Abgabestellung 9, in der er oberhalb der vierten Transportvorrichtung 1d bis zum Ende des Abgabebereiches entlang bewegt wird.

Der Übergabekopf 7 ist am freien Ende des Auslegers 10 eines mehrachsigen Handhabungsautomaten 11 angebracht, der den Übergabekopf 7 in geführten Bewegungen zwischen dem Aufnahmebereich und dem Abgabebereich der Übergabevorrichtung 5 einerseits und zwischen seiner Aufnahmestellung 8 und seiner Abgabestellung 9 anderseits hin und her bewegt. Der Ausleger 10 ist um eine vertikale Achse 12 drehbar und besitzt einen um eine horizontale Knickachse 13 schwenkbaren Tragarm 10a, der seinerseits einen µm die zur Knickachse 13 senkrechte Längsachse des Tragarmes 10a drehbaren Abschnitt 10b besitzt, an dessen freiem Ende der Übergabekopf 7 angebracht ist. Neben dem Handhabungsautomaten 11 ist ein Schaltschrank angeordnet, der die Steuerung für den Handhabungsautomaten 11 enthält und mit diesem über Steuerleitungen verbunden ist.

Bei jeder einzelnen Blockbildungsphase eines ein- oder mehrphasigen Blockbildungsverfahrens wird jeweils ein oberes Waffelblatt von der oberen Transportebene in einer geführten Bewegung zur unteren Transportebene bewegt, dabei umgedreht und mit der Oberseite eines auf der unteren Transportebene liegenden Vorblockes zu einem gefüllten Waffelblock zusammengefügt, der eine unbeschichtete Oberseite und eine unbeschichtete Unterseite besitzt.

Das obere Waffelblatt wird von der oberen Transportvorrichtung 2 an den Übergabekopf 7 übergeben, der sich im oberen Aufnahmebereich der Übergabevorrichtung 5 in seiner Aufnahmestellung 8 befindet. Die Haltevorrichtung 6 des Übergabekopfes 7 erfaßt das obere Waffelblatt an dessen unbeschichteter, nach unten weisender Seite und hält es am Übergabekopf 7 fest. Anschließend bewegt der Handhabungsautomat 11 den Übergabekopf 7 in einer geführten Bewegung aus seiner Aufnahmestellung 8 in seine Abgabestellung 9 und gleichzeitig aus dem Aufnahmebereich in den Abgabebereich der Übergabevorrichtung 5. Dadurch wird das an der Vorderseite des Übergabekopfes 7 festgehaltene obere Waffelblatt von der oberen Transportvorrichtung 2b zur unteren vierten Transportvorrichtung 1d transportiert und gleichzeitig mit seiner vorher nach oben weisenden Seite nach unten umgedreht.

Im Abgabebereich der Übergabevorrichtung 5 wird der in seiner Abgabestellung 9 befindliche Übergabekopf 7 vom Handhabungsautomaten 11 oberhalb der vierten Transportvorrichtung 1d entlang bewegt und das umgedrehte obere Waffelblatt mit seiner nach unten weisenden Seite voran mit der Oberseite des betreffenden Vorblockes zu einem gefüllten Waffelblock verbunden. Der Übergabekopf 7 setzt das umgedrehte obere Waffelblatt von oben auf den, auf der vierten Transportvorrichtung 1d liegenden Vorblock auf und drückt es an dessen Oberseite an. Das Andrücken kann durch die geführte Bewegung des Übergabekopfes 7 selbst ausgeführt werden, wobei dann im Luftkissen der Haltevorrichtung 6 der Unterdruck beseitigt und das obere Waffelblatt des gerade gebildeten Waffelblockes freigegeben wird. Das Andrücken des umgedrehten oberen Waffelblattes kann vom Luftkissen des Übergabekopfes 7 unterstützt werden, wobei dieses mit Druckluft beaufschlagt und das obere Waffelblatt aus der Haltevorrichtung 6 herausgedrückt wird. Nach der Freigabe des umgedrehten oberen Waffelblattes durch den Übergabekopf 7 bewegt der Handhabungsautomat 11 den Übergabekopf 7 wieder zurück in seine Aufnahmestellung 8 und in den oberen Aufnahmebereich der Übergabevorrichtung 5.

Bei der Herstellung von zweilagigen Waffelblöcken ist das in der unteren Transportebene zugeführte Waffelblatt der einlagige Vorblock des einphasigen Blockbildungsverfahrens und der gefüllte zweilagige Waffelblock das Endprodukt der Blockbildung, das von der vierten Transportvorrichtung 1d abtransportiert wird. Die zweilagigen Waffelblöcke bestehen jeweils aus einem den Waffelblock nach unten begrenzenden ersten Waffelblatt, einem den Waffelblock nach oben begrenzenden zweiten Waffelblatt und einer zwischen den beiden Waffelblättern liegenden Streichmasseschicht. Für die aufeinanderfolgende Herstellung der zweilagigen Waffelblöcke werden die ersten Waffelblätter der Waffelblöcke der Übergabevorrichtung 5 in der unteren Transportebene und die zweiten Waffelblätter der Waffelblöcke in der oberen Transportebene zugeführt.

Bei der Herstellung eines mehrlagigen Waffelblockes in einem Blockbildungsverfahren mit mehreren unmittelbar aufeinanderfolgenden Blockbildungsphasen ist das am Beginn des Verfahrens in der unteren Transportebene zugeführte Waffelblatt der (einlagige) Vorblock der ersten Blockbildungsphase und der erste Vorblock des Blockbildungsverfahrens. Das Endprodukt der ersten Blockbildungsphase ist ein auf der unteren Transportebene liegender, gefüllter, zweilagiger Waffelblock, der den (zweilagigen) Vorblock für die zweite Blockbildungsphase und den zweiten Vorblock des Verfahrens bildet. Das Endprodukt der zweiten Blockbildungsphase ist ein auf der unteren Transportebene liegender, gefüllter, dreilagiger Waffelblock, der entweder bereits das Endprodukt der Blockbildung darstellt und als solches von der vierten Transportvorrichtung 1d abtransportiert wird, oder aber den Vorblock für eine weiter, dritte Blockbildungsphase des Verfahrens darstellt und während dieser weiteren Blockbildungsphase auf der unteren Transportebene liegen bleibt. Der einer einzelnen Blockbildungsphase entsprechende Abschnitt des Blockbildungsverfahrens wird in der zweiten und jeder weiteren Blockbildungsphase wiederholt bis der in der letzten Blockbildungsphase hergestellte gefüllte Waffelblock die gewünschte Anzahl an Waffelblatt-Lagen aufweist und als Endprodukt der Blockbildung von der vierten Transportvorrichtung 1d abtransportiert wird. Die vierte Transportvorrichtung 1d kann bis zum Ende des mehrphasigen Blockbildungsverfahrens angehalten werden und erst zum Abtransport des dabei entstandenen, fertigen, mehrlagigen Waffelblockes wieder in Gang gesetzt werden.

In der zweiten und jeder weiteren Blockbildungsphase werden die oben für eine einzelne Blockbildungsphase erläuterten Bewegungsabläufe mit dem zweiten bzw. jeweils nächsten, in der oberen Transportebene zugeführten, oberen Waffelblatt wiederholt. Dabei wird jeweils an der Oberseite des zuvor gebildeten Vorblockes eine weitere Waffelblattlage und eine weitere Streichmasseschicht hinzugefügt. So entsteht am Ende jeder Blockbildungsphase jeweils ein gefüllter Waffelblock, dessen unbeschichtete Oberseite von der jetzt nach oben weisenden Unterseite des in dieser Blockbildungsphase umgedrehten, beschichteten Waffelblattes gebildet wird und dessen oberste Streichmasseschicht von der Streichmasse dieses zuletzt umgedrehten, beschichteten Waffelblattes gebildet wird.

Für die aufeinanderfolgende Herstellung der gefüllten mehrlagigen Waffelblöcke werden die jeweils für die untersten Waffelblätter der Waffelblöcke vorgesehenen Waffelblätter der Übergabevorrichtung 5 als einlagige Vorblöcke in der unteren Transportebene zugeführt, während die für die übrigen Waffelblätter der Waffelblöcke vorgesehenen Waffelblätter der Übergabevorrichtung 5 als obere Waffelblätter in der oberen Transportebene zugeführt werden.

Die gefüllten zweilagigen Waffelblöcke werden in einem einphasigen Blockbildungsverfahren hergestellt. Jeder zweilagige Waffelblock besitzt eine unbeschichtete Unterseite, die von der Unterseite des ersten Waffelblattes gebildet wird, und eine unbeschichtete Oberseite, die von der, nach dem Umdrehen des zweiten Waffelblattes jetzt nach oben weisenden Unterseite des zweiten Waffelblattes gebildet wird. Die zwischen seinen beiden Waffelblättern liegende Streichmasseschicht kann vom ersten Waffelblatt oder von zweiten Waffelblatt oder von beiden Waffelblättern stammen.

Wird der Übergabevorrichtung 5 als erstes Waffelblatt ein an der Oberseite beschichtetes Waffelblatt und als zweites Waffelblatt ein unbeschichtetes Waffelblatt zugeführt, so wird die Streichmasseschicht des zweilagigen Waffelblockes nur von der Streichmasse des ersten Waffelblattes gebildet.

Wird der Übergabevorrichtung 5 als erstes Waffelblatt ein unbeschichtetes Waffelblatt und als zweites Waffelblatt ein an der Oberseite beschichtetes Waffelblatt zugeführt, so wird die Streichmasseschicht des zweilagigen Waffelblockes nur von der Streichmasse des umgedrehten, zweiten Waffelblattes gebildet.

Wird der Übergabevorrichtung 5 als erstes und als zweites Waffelblatt jeweils ein an der Oberseite beschichtetes Waffelblatt zugeführt, so wird die Streichmasseschicht des zweilagigen Waffelblockes von den aufeinanderliegenden Streichmassen beider Waffelblätter gebildet.

Wird der Übergabevorrichtung 5 als erstes und als zweites Waffelblatt jeweils ein ebenes Waffelblatt zugeführt, so ist der entstandene zweilagige Waffelblock ein ebener Waffelblock, der an seiner Unterseite und an seiner Oberseite eben ist.

Wird der Übergabevorrichtung 5 als erstes Waffelblatt ein ebenes Waffelblatt und als zweites Waffelblatt ein mit Ausbuchtungen versehenes Waffelblatt zugeführt, so ist der entstandene zweilagige Waffelblock ein nur an seiner Oberseite mit Ausbuchtungen versehener Waffelblock.

Wird der Übergabevorrichtung 5 als erstes Waffelblatt ein mit Ausbuchtungen versehenes Waffelblatt und als zweites Waffelblatt ein ebenes Waffelblatt zugeführt, so ist der entstandene zweilagige Waffelblock ein nur an seiner Unterseite mit Ausbuchtungen versehener Waffelblock.

Wird der Übergabevorrichtung 5 als erstes und als zweites Waffelblatt des Waffelblockes jeweils ein mit Ausbuchtungen versehenes Waffelblatt zugeführt, so ist der entstandene zweilagige Waffelblock ein an seiner Unterseite und an seiner Oberseite mit Ausbuchtungen versehener Waffelblock.

Die gefüllten dreilagigen Waffelblöcke werden in einem zweiphasigen Blockbildungsverfahren hergestellt. Jeder dreilagige Waffelblock besteht aus einem den Waffelblock nach unten begrenzenden ersten Waffelblatt, einem in der Mitte des Waffelblockes angeordneten zweiten Waffelblatt, einem den Waffelblock nach oben begrenzenden dritten Waffelblatt, sowie einer zwischen dem ersten und zweiten Waffelblatt liegenden unteren Streichmasseschicht und einer zwischen dem zweiten und dritten Waffelblatt liegenden oberen Streichmasseschicht.

Bei der Herstellung eines dreilagige Waffelblockes wird in der ersten Blockbildungsphase ein oberes Waffelblatt aus der oberen Ebene entnommen, umgedreht und als zweites Waffelblatt des Waffelblockes mit dem in der unteren Ebene zugeführten ersten Waffelblatt des Waffelblockes zu einem zweilagigen Vorblock verbunden. In der zweiten Blockbildungsphase wird ein beschichtetes oberes Waffelblatt aus der oberen Ebene entnommen, umgedreht und als drittes Waffelblatt des Waffelblockes mit dem vorangehend gebildeten zweilagigen Vorblock zum fertigen dreilagigen Waffelblock verbunden. Dieser besitzt nun eine unbeschichtete Oberseite, die von der unbeschichteten Unterseite des umgedrehten dritten Waffelblattes des Waffelblockes gebildet wird, und eine obere Streichmasseschicht, die von der Streichmasse des umgedrehten dritten Waffelblattes gebildet wird.

Die Figur 4 zeigt eine Anlage zum Herstellen von gefüllten Waffelblöcken bei einem Blockbildungsverfahren, bei dem in einer zweiphasigen Blockbildung dreilagige Waffelblöcke aus ebenen Waffelblättern hergestellt werden.

Für die untersten Waffelblätter der dreilagigen Waffelblöcke werden unbeschichtete ebene Waffelblätter verwendet. Diese werden als untere Waffelblätter 14 von einer unteren Zuführvorrichtung 15 in einer unteren Ebene einem Blockbildner zugeführt. Für die übrigen Waffelblätter der dreilagigen Waffelblöcke werden beschichtete ebene Waffelblätter verwendet. Diese werden als obere Waffelblätter 16 von einer oberen Zuführvorrichtung 17 in einer oberen Ebene dem Blockbildner zugeführt. Dem Blockbildner ist eine Transportvorrichtung 18 zugeordnet, die der unteren Zuführvorrichtung 15 in Transportrichtung nachgeordnet ist und auf der die Waffelblöcke gebildet und abtransportiert werden.

Der Blockbildner ist ähnlich dem des Ausführungsbeispieles der Fig. 1 bis 3 ausgebildet und umfaßt einen, an seiner Vorderseite mit einer Haltevorrichtung für die oberen Waffelblätter 16 versehenen Übergabekopf 19, der am freien Ende eines beweglichen Auslegers eines mehrachsigen Handhabungsautomaten angebracht ist. Der Handhabungsautomat bewegt den Übergabekopf 19 in einer geführten Bewegung aus einem der oberen Zuführvorrichtung 17 zugeordneten Aufnahmebereich in einen der unteren Zuführvorrichtung 15 zugeordneten Abgabebereich und dreht dabei den Übergabekopf aus seiner Aufnahmestellung 20 mit nach oben weisender Vorderseite in seine Abgabestellung 21 mit nach unten weisender Vorderseite. Im Aufnahmebereich befindet sich der mit seiner Vorderseite nach oben weisende Übergabekopf 19 zwischen dem vorderen Ende der oberen Zuführvorrichtung 17 und einem dieser in Transportrichtung nachgeordneten, stationären Endanschlag 22. An der Vorderseite des Übergabekopfes 19 ist eine Haltevorrichtung vorgesehen, die eine Auflagefläche für die unbeschichtete Unterseite der oberen Waffelblätter 16 und ein der Auflagefläche zugeordnetes Luftkissen umfaßt.

Jede Blockbildung beginnt mit einem unteren Waffelblatt 14, das von der unteren Zuführvorrichtung 15 an die Transportvorrichtung 18 weitergegeben und von dieser bis in den Abgabebereich des Blockbildners transportiert wird. Der Übergabekopf 19 des Blockbildners ist in seine Aufnahmestellung 20 gedreht und befindet sich im Aufnahmebereich zwischen dem vorderen Ende der oberen Zuführvorrichtung 17 und dem vorderen Endanschlag 22. Die obere Zuführvorrichtung 17 befördert ein oberes Waffelblatt 16 auf die Auflagefläche des Übergabekopfes 19 und schiebt es bis zum stationären Endanschlag 22. Das obere Waffelblatt liegt mit seiner unbeschichteten Unterseite auf der Auflagefläche auf und wird dort von dem mit Unterdruck beaufschlagten Luftkissen des Übergabekopfes 19 angesaugt und so am Übergabekopf 19 festgehalten. Anschließend wird der Übergabekopf 19 vom Handhabungsautomaten in einer geführten Bewegung aus dem Aufnahmebereich in den Abgabebereich abgesenkt und dabei samt dem von ihm gehaltenen oberen Waffelblatt 16 aus seiner Aufnahmestellung 20 in seine Abgabestellung 21 gedreht, in der das obere Waffelblatt 16 mit seiner beschichteten Seite nach unten weist.

Bevor die geführte Bewegung beginnt, befindet sich der in seine Aufnahmestellung gedrehte Übergabekopf 19 in dem der oberen Zuführvorrichtung 17 zugeordneten Aufnahmebereich. Der vordere Rand des Übergabekopfes 19 ist dem Ende der oberen Zuführvorrichtung 17 benachbart angeordnet und der hintere Rand des Übergabekopfes 19 ist dem stationären Endanschlag 22 benachbart angeordnet. Während der geführten Bewegung des Übergabekopfes 19 wird sein vorderer Rand in Transportrichtung der beiden Zuführvorrichtungen 15 und 17 nach vorne bewegt und sein hinterer Rand entgegen dieser Transportrichtung nach hinten bewegt. Gleichzeitig wird der Übergabekopf 19 mit dem oberen Waffelblatt 16 an das auf der Transportvorrichtung 18 liegende untere Waffelblatt 14 herangeführt und das umgedrehte obere Waffelblatt 16 auf das untere Waffelblatt 14 aufgesetzt und mit diesem zu einem ebenen zweilagigen Waffelblock zusammengefügt.

Nach dem Zusammenfügen der beiden Waffelblätter 14 und 16 wird der Unterdruck für das Luftkissen abgeschaltet und das obere Waffelblatt 16 von der Haltevorrichtung des Übergabekopfes 19 freigegeben. Damit ist die erste Blockbildungsphase beendet und der Übergabekopf 19 wird vom Handhabungsautomaten wieder zurück in den Aufnahmebereich bewegt und wieder zurück in seine Aufnahmestellung 20 gedreht.

Der nach Abschluß der ersten Blockbildungsphase auf der Transportvorrichtung 18 liegende zweilagige Waffelblock bildet den Vorblock für die nun folgende zweite Blockbildungsphase. In dieser wird das nächste, in den Aufnahmebereich des Blockbildners beförderte, obere Waffelblatt 16 von dessen Übergabekopf 19 erfaßt, mit der beschichteten Oberseite nach unten umgedreht und im Abgabebereich auf die unbeschichtete Oberseite des zweilagigen Vorblockes aufgesetzt und mit diesem zu einem dreilagigen ebenen Waffelblock zusammengefügt.

Nach dem Abschluß der zweiten Blockbildungsphase wird der entstandene dreilagige Waffelblock auf der Transportvorrichtung 18 abtransportiert.

Die Figuren 5 bis 8 zeigen schematisch verschiedene Bewegungsabläufe während einer einzelnen Blockbildungsphase von der Entnahme eines oberen Waffelblattes aus der oberen Ebene bis zur Abgabe des umgedrehten oberen Waffelblattes an den Vorblock in der unteren Ebene. Die Figuren 5 bis 8 zeigen schematisch an der Oberseite beschichtete und an der Unterseite mit Ausbuchtungen versehene obere und untere Waffelblätter während eines einphasigen Blockbildungsverfahrens für die Herstellung von sogenannten Hohlwaffelblöcken, die jeweils aus zwei beschichteten und mit Ausbuchtungen versehenen Waffelblättern zusammengesetzt werden. Diese Bewegungsabläufe gelten auch für ebene beschichtete und unbeschichtete Waffelblätter, die in einem zweioder mehrphasigen Blockbildungsverfahren zu zweilagigen oder mehrlagigen Waffelblöcken zusammengesetzt werden. Bei einem mehrphasigen Blockbildungsverfahren erfahren diese Bewegungsabläufe nur insofern eine geringfügige Veränderung, als sie jeweils an die von Blockbildungsphase zu Blockbildungsphase zunehmende Höhe der jeweiligen Vorblöcke angepaßt werden müssen.

Die Figuren 5 bis 8 zeigen jeweils eine Anlage zum Herstellen von zweilagigen, gefüllten, an der Oberseite und an der Unterseite jeweils mit Ausbuchtungen versehenen Waffelblöcken, sogenannten Hohlwaffelblöcken.

Die Anlage umfaßt eine obere Zuführvorrichtung 23, die die oberen Waffelblätter 24 in einer oberen Ebene zum Aufnahmebereich einer Übergabevorrichtung transportiert. Am vorderen Ende der oberen Zuführvorrichtung 23 ist ein Sensor 25 angeordnet, der jedes obere Waffelblatt 24 registriert, bevor es in den Aufnahmebereich der Übergabevorrichtung befördert wird.

Die Anlage umfaßt weiters eine untere Zuführvorrichtung 26, die die unteren Waffelblätter 27 in einer unteren Ebene zum Abgabebereich der Übergabevorrichtung transportiert. Am vorderen Ende der unteren Zuführvorrichtung 26 ist ein Sensor 28 angeordnet, der jedes untere Waffelblatt 27 registriert, bevor es in den Abgabebereich der Übergabevorrichtung befördert wird.

Dem Abgabebereich der Übergabevorrichtung ist eine der unteren Zuführvorrichtung 26 nachgeordnete untere Transportvorrichtung 29 zugeordnet, auf der die fertigen Waffelblöcke abtransportiert werden.

Die Übergabevorrichtung der Anlage umfaßt einen mehrachsigen (nicht dargestellten) Handhabungsautomaten, der einen Übergabekopf 30 trägt, der an seiner Vorderseite mit einer Haltevorrichtung für die oberen Waffelblätter 24 versehen ist. Die Haltevorrichtung weist eine zur Vorderseite des Übergabekopfes 30 hin offene Vertiefung 31 auf, in der ein oberes Waffelblatt 14 aufgenommen und mittels Unterdruck festgehalten werden kann.

Der Handhabungsautomat bewegt den Übergabekopf 30 in geführten Bewegungen zwischen dem der oberen Zuführvorrichtung 23 benachbarten Aufnahmebereich 32 und dem der untere Transportvorrichtung 29 zugeordneten Abgabebereich 33 der Übergabevorrichtung hin und her. Während dieser geführten Bewegungen wird der Übergabekopf 30 zwischen seiner mit 30a bezeichneten Aufnahmestellung, in der er mit seiner Vorderseite nach oben weist, und seiner mit 30b bezeichneten Abgabestellung, in der er mit seiner Vorderseite nach unten weist, hin und her gedreht. im Aufnahmebereich 32 ist der vordere Rand 34 des in seine Aufnahmestellung gedrehten Übergabekopfes 30a dem vorderen Ende der oberen Zuführvorrichtung 23 unmittelbar benachbart angeordnet, während sein hinterer Rand 35 vom vorderen Ende der oberen Zuführvorrichtung 23 entfernt angeordnet ist. Im Abgabebereich 33 liegt der hintere Rand 35 des in seine Abgabestellung gedrehten Übergabekopfes 30b dem vorderen Ende der unteren Zuführvorrichtung 26 näher als sein vorderer Rand 34.

Bei der in Figur 5 dargestellten Blockbildung wird ein oberes Waffelblatt 24 von der oberen Zuführvorrichtung 23 in den Aufnahmebereich 32 transportiert und in die nach oben offene Vertiefung 31 des in seine Aufnahmestellung gedrehten Übergabekopfes 30a eingebracht. Das obere Waffelblatt 24 wird von der Haltevorrichtung des Übergabekopfes 30 festgehalten und zusammen mit diesem in einer geführten Bewegung in den Abgabebereich 33 abgesenkt und dabei mit seiner beschichteten Vorderseite nach unten umgedreht. Im Abgabebereich 33 wird das umgedrehte obere Waffelblatt 24 mit seiner nach unten weisenden beschichteten Vorderseite auf die nach oben weisende beschichteten Vorderseite eines unteren Waffelblattes 27 aufgesetzt und mit diesem zu einem zweilagigen mit Ausbuchtungen versehenen Waffelblock zusammenfügt. Das untere Waffelblatt bildet den einlagigen Vorblock dieser Blockbildung. Beim Absenken des Übergabekopfes 30 wird sein vorderer Rand 34 in Transportrichtung der unteren Transportvorrichtung 29 nach vorne bewegt, während gleichzeitig sein hinterer Rand 35 entgegen dieser Transportrichtung nach hinten bewegt wird. Während der geführten Bewegung wird der Übergabekopf 30 zusammen mit dem von ihm gehaltenen oberen Waffelblatt 24 an jene Position angepaßt, die der vom unteren Waffelblatt 27 gebildete Vorblock auf der unteren Transportvorrichtung 29 einnimmt.

Bei der in Figur 6 dargestellten Blockbildung wird der in den Abgabebereich 33 abgesenkte und in seine Abgabestellung gedrehte Übergabekopf 30b dem auf der unteren Transportvorrichtung 29 liegenden Vorblock 27 nachgeführt. Am hinteren Rand 35 des Übergabekopfes 30 steht ein hinterer Anschlag 36 über die beschichtete Seite des vom Übergabekopf 30 gehaltenen oberen Waffelblattes 24 hinaus vor. Der Übergabekopf 30 wird mit seinem hinteren Anschlag 36 von hinten an die Hinterkante des Vorblockes 27 herangeführt und schiebt dann den Vorblock 27 auf der unteren Transportvorrichtung 29 in deren Transportrichtung weiter, bis der Übergabekopf 30 das obere Waffelblatt 24 auf die Oberseite des Vorblockes 27 aufgesetzt hat.

Bei der in Figur 7 dargestellten Blockbildung wird dem in den Abgabebereich 33 abgesenkten und in seine Abgabestellung gedrehten Übergabekopf 30b der auf der unteren Transportvorrichtung 29 liegende Vorblock 27 nachgeführt. Der Übergabekopf 30 trägt an seinem vorderen Rand 34 einen vorderen Anschlag 37, der über die beschichtete Seite des vom Übergabekopf 30 gehaltenen oberen Waffelblattes 24 hinaus vorsteht. Der Vorblock 27 wird dem Übergabekopf 30 von der unteren Transportvorrichtung 29 nachgeführt, bis die Vorderkante des Vorblockes 27 gegen den vorderen Anschlag 37 des Übergabekopfes 30 anstößt. Anschließend wird der Vorblock 27 vom vorderen Anschlag 37 des Übergabekopfes 30 zurückgehalten bis der Übergabekopf 30 das obere Waffelblatt 24 auf die Oberseite des Vorblockes 27 aufgesetzt hat.

Bei der in Figur 8 dargestellten Blockbildung wird der auf der unteren Transportvorrichtung 29 liegende Vorblock 27 von einem im Abgabebereich 33 der Übergabevorrichtung angeordneten Hubtisch 38 von der unteren Transportvorrichtung 29 abgehoben und mit seiner Oberseite von unten gegen die nach unten weisende Seite des umgedrehten oberen Waffelblattes 24 angedrückt, das von dem in den Abgabebereich 33 abgesenkten und in seine Abgabestellung gedrehten Übergabekopf 30b festgehalten wird.

Die untere Transportvorrichtung 29 weist zwei oder mehrere endlose, quer zur Transportrichtung nebeneinander angeordnete Transportriemen 29a auf, auf deren oberen Trume 29b der Vorblock 27 aufliegt. Der vertikal auf und ab bewegbare Hubtisch 38 besitzt eine obere Auflagefläche 39, deren Größe jener der Waffelblätter entspricht, und einen über die Auflagefläche 39 nach oben verstehenden vorderen Anschlag 40 für die Vorblöcke 27. Die Auflagefläche 39 ist parallel zur Transportebene der unteren Transportvorrichtung 29 angeordnet und der Anschlag 40 senkrecht dazu. Im Hubtisch 38 sind zur Transportrichtung parallele Längsnuten eingelassen, die während des Anhebens des Hubtisches 38 die oberen Trume 29b der Transportriemen 29a berührungsfrei in sich aufnehmen.

Der Hubtisch 38 kann zwischen einer unteren Freigabestellung, einer mittleren Sperrstellung und einer oberen Andrückstellung hin und her bewegt werden. In der Freigabestellung ist der Hubtisch 38 mit seinem Anschlag 40 unter die oberen Trume 29b der Transportriemen 29a abgesenkt. In der Sperrstellung ragt der Hubtisch 38 mit seinem Anschlag 40 über die oberen Trume 29b der Transportriemen 29a nach oben vor, während seine obere Auflagefläche 39 noch unterhalb der oberen Trume 29b der Transportriemen 29a liegt. In der Andrückstellung ragt der Hubtisch 38 mit seinem Anschlag 40 und seiner Auflagefläche 39 über die oberen Trume 29b der Transportriemen 29a nach oben. In der Andrückstellung drückt der Hubtisch 38 einen auf seiner Auflagefläche 39 liegenden und von dieser über seine gesamte Unterseite unterstützten Vorblock 27 gegen ein umgedrehtes oberes Waffelblatt 24, das von dem im Abgabebereich 33 angeordneten und in seine Abgabestellung gedrehten Übergabekopf 30b festgehalten wird.

Figur 9 zeigt eine dem Ausführungsbeispielen der Figuren 5 bis 8 ähnliche Anlage bei einer der Figur 8 ähnlichen Blockbildung mit einer anderen Ausführungsform der Übergabevorrichtung. Bei dieser Übergabevorrichtung wird der mit einer Haltevorrichtung für die oberen Waffelblätter 24 versehene Übergabekopf 30 um eine stationäre, horizontale Schwenkachse 41 aus dem Aufnahmebereich 32 in den Abgabebereich 33 der Übergabevorrichtung geschwenkt. Die Schwenkachse 41 ist zwischen der von der oberen Zuführvorrichtung 23 gebildeten oberen Transportebene und der von der unteren Zuführvorrichtung 26 gebildeten unteren Transportebene angeordnet. Im Abgabebereich 33 der Übergabevorrichtung ist, so wie beim Ausführungsbeispiel der Figur 8, ein vertikal auf und ab bewegbarer Hubtisch 42 vorgesehen. Bei der in Figur 9 dargestellten Blockbildung wird der auf der unteren Transportvorrichtung 29 liegende Vorblock 27 vom Hubtisch 42 von der unteren Transportvorrichtung 29 abgehoben und mit seiner Oberseite von unten gegen die nach unten weisende Seite des umgedrehten oberen Waffelblattes 24 angedrückt, das von dem in den Abgabebereich 33 und gleichzeitig in seine Abgabestellung geschwenkten Übergabekopf 30 festgehalten wird. Die Ausführung der unteren Transportvorrichtung 29 und des Hubtisches 42 entsprechen den in Zusammenhang mit der Figur 8 beschriebenen Ausführungsformen.

Auf seinem Weg vom oberen Aufnahmebereich 32 in den unteren Abgabebereich 33 wird der Übergabekopf 30 um die Schwenkachse 41 auch aus seiner Aufnahmestellung 30a in seine Abgabestellung 30b, geschwenkt. Dabei bewegt der Übergabekopf 30 das von ihm gehaltene obere Waffelblatt 24 zuerst in Transportrichtung der unteren Transportvorrichtung 29 über die obere Transportebene nach oben hinaus und dann entgegen dieser Transportrichtung bis in den unteren Abgabebereich 33. Im Abgabebereich 33 hält der in seiner Abgabestellung befindliche Übergabekopf 30a das umgedrehte obere Waffelblatt 24 fest und stützt es nach oben ab, während der Hubtisch 42 den Vorblock 27 mit seiner Oberseite von unten gegen die nach unten weisende Seite des oberen Waffelblattes 24 andrückt und mit diesem zu einem zweilagigen Waffelblock verbindet. Anschließend gibt der Übergabekopf 30 das umgedrehte obere Waffelblatt 24 frei. Der zweilagige Waffelblock wird vom Hubtisch 42 auf der unteren Transportvorrichtung 29 abgelegt, während der Hubtisch 42 bis in seine Freigabestellung abgesenkt wird. Jetzt kann der fertige Waffelblock von der unteren Transportvorrichtung 29 abtransportiert werden. Bevor bzw. während der nächste Vorblock auf der unteren Transportvorrichtung 29 zum Hubtisch 42 transportiert wird, wird der Hubtisch 42 selbst wieder bis in seine Sperrstellung angehoben.

Die Figuren 10 und 11 zeigen eine Anlage zum Herstellen von gefüllten Waffelblöcken mit einer einem Blockbildner 43 zugeordneten Transportvorrichtung 44, die eine untere Transportebene definiert. Auf dieser Transportvorrichtung 44 werden dem Blockbildner 43 zum Herstellen eines einzelnen, zwei- oder mehrlagigen Waffelblockes jeweils ein Vorblock und ein oder mehrere beschichtete Waffelblätter nacheinander zugeführt. Der Vorblock besitzt eine unbeschichtete Oberseite und eine unbeschichtete Unterseite und kann aus einem einzelnen unbeschichteten Waffelblatt oder aus einem zwei- oder mehrlagigen Waffelblock bestehen. An der Transportvorrichtung 44 ist ein Sensor 45 angeordnet, der die dem Blockbildner 43 in der unteren Transportebene zuzuführenden Vorblöcke und Waffelblätter registriert.

Der Blockbildner 43 umfaßt einen Arbeitskopf 46 mit einer der Transportvorrichtung 44 zugewandten Vorderseite, an der eine mit einem Luftkissen versehene Haltevorrichtung 47 vorgesehen ist. Das Luftkissen wird zum Erfassen eines Vorblockes mit Unterdruck und zum Abgeben des fertigen Waffelblockes mit Überdruck beaufschlagt. Der Arbeitskopf 46 wird vom Blockbildner 43 zwischen einzelnen Arbeitsstellungen hin und her bewegt, die von der Transportvorrichtung 44 verschieden weit entfernt sind.

Der Arbeitskopf 46 ist am freien Ende des Auslegers 48 eines mehrachsigen Handhabungsautomaten 49 angebracht, der den Arbeitskopf 46 in geführten Bewegungen zwischen seinen Arbeitsstellungen hin und her bewegt. Der Ausleger 48 ist um eine vertikale Achse 50 drehbar und besitzt einen um eine horizontale Knickachse 51 schwenkbaren Tragarm 52, der an seinem freien Ende den Arbeitskopf 46 trägt. Neben dem Handhabungsautomaten ist ein Schaltschrank angeordnet, der die Steuerung für den Handhabungsautomaten enthält und mit diesem über Steuerleitungen verbunden ist.

Zum Herstellen von gefüllten, zweilagigen Waffelblöcken, die jeweils aus einem ersten unbeschichteten Waffelblatt und einem zweiten beschichteten Waffelblatt hergestellt werden, ist eine einphasige Blockbildung mit zwei Arbeitsstellungen des Arbeitskopfes 46 vorgesehen.

Während einer Blockbildung wird der Arbeitskopf 46 in seine erste untere Arbeitsstellung bewegt, in der er das von der Transportvorrichtung 44 als Vorblock angelieferte erste unbeschichtete Waffelblatt an dessen unbeschichteter Oberseite erfaßt und mit seiner Haltevorrichtung 47 festhält. Anschliessend wird der Arbeitskopf 46 mit dem Vorblock in die zweite obere Arbeitsstellung bewegt und mit dem zweiten, von der Transportvorrichtung 44 angelieferten, beschichteten Waffelblatt zu einem zweilagigen Waffelblock verbunden, der auf der Transportvorrichtung 44 abtransportiert wird. Für die nächste Blockbildung wird der Arbeitskopf 46 wieder in seine erste untere Arbeitsstellung bewegt.

Zum Herstellen von gefüllten, dreilagigen Waffelblöcken, die jeweils aus einem ersten unbeschichteten Waffelblatt und einem zweiten und einem dritten jeweils beschichteten Waffelblatt hergestellt werden, ist eine zweiphasige Blockbildung mit drei Arbeitsstellungen des Arbeitskopfes 46 vorgesehen.

Während einer Blockbildung wird der Arbeitskopf 46 in der ersten Blockbildungsphase in seine erste untere Arbeitsstellung bewegt, in der er das von der Transportvorrichtung **44** als einlagiger Vorblock angelieferte erste unbeschichtete Waffelblatt an dessen unbeschichteter Oberseite erfaßt und mit seiner Haltevorrichtung 47 festhält. Anschließend wird der Arbeitskopf 46 mit dem Vorblock in die zweite mittlere Arbeitsstellung bewegt, in der der vom Arbeitskopf 46 gehaltene einlagige Vorblock mit dem zweiten, von der Transportvorrichtung 44 angelieferten, beschichteten Waffelblatt zu einem zweilagigen Vorblock verbunden wird. In der zweiten Blockbildungsphase wird der Arbeitskopf 46 mit dem zweilagigen Vorblock in die dritte obere Arbeitsstellung bewegt, in der der vom Arbeitskopf 46 gehaltene zweilagige Vorblock mit dem dritten, von der Transportvorrichtung 44 angelieferten, beschichteten Waffelblatt zu einem dreilagigen Waffelblock verbunden wird, der auf der Transportvorrichtung 44 abtransportiert wird. Für die nächste zweiphasige Blockbildung wird der Arbeitskopf 46 wieder in seine erste untere Arbeitsstellung bewegt.

Mit jeder Blockbildungsphase wächst der vom Arbeitskopf 46 gehaltene Vorblock an seiner Unterseite um eine Waffelblattlage und eine Streichmasseschicht. Während einer Blockbildung bleibt der Arbeitskopf 46 ständig im Eingriff mit der unbeschichteten Oberseite des vom ihm gehaltenen Vorblockes.

Zum Herstellen von gefüllten, dreilagigen Waffelblöcken, die jeweils aus einem zweilagigen Vorblock und einem beschichteten Waffelblatt hergestellt werden, ist eine einphasige Blockbildung mit zwei Arbeitsstellungen des Arbeitskopfes 46 vorgesehen.

Während einer Blockbildung wird der Arbeitskopf 46 in seine erste untere Arbeitsstellung bewegt, in der er den von der Transportvorrichtung 44 angelieferten zweilagigen Vorblock an dessen unbeschichteter Oberseite erfaßt und mit seiner Haltevorrichtung 47 festhält. Anschließend wird der Arbeitskopf 46 mit dem zweilagigen Vorblock in die zweite obere Arbeitsstellung bewegt und mit dem von der Transportvorrichtung 44 angelieferten, beschichteten Waffelblatt zu einem dreilagigen Waffelblock verbunden, der auf der Transportvorrichtung 44 abtransportiert wird.

Sollen den dreilagigen Waffelblöcken weitere Waffelblattlagen bzw. Streichmasseschichten hinzugefügt werden, so ist für jede weitere Waffelblattlage bzw. jede weitere Streichmasseschicht eine weitere Blockbildungsphase erforderlich, in der in einer weiteren Arbeitsstellung des Arbeitskopfes 46 an der Unterseite des vom Arbeitskopf 46 gehaltenen Vorblockes ein weiteres, von der Transportvorrichtung 44 angeliefertes, beschichtetes Waffelblatt angefügt wird. Während einer Blockbildung wächst die Höhe des vom Arbeitskopf 46 gehaltenen Vorblockes von einer Blockbildungsphase zur nächsten. Gleichzeitig wächst die Entfernung des Arbeitskopfes 46 von der Transportvorrichtung 44 von einer Arbeitsstellung zur nächsten. Der Abstand der unbeschichteten Unterseite des Vorblock von der Transportvorrichtung 44 kann während aller Blockbildungsphasen gleich bleiben.

Das Zusammenfügen eines vom Arbeitskopf 46 gehaltenen Vorblockes mit einem von der Transportvorrichtung 44 angelieferten beschichteten Waffelblatt kann erfindungsgemäß auf verschiedene Weise erfolgen.

Das Zusammenfügen kann vom Handhabungsautomaten 49 durch die geführte Bewegung des Arbeitskopfes 46 ausgeführt werden. Dabei wird der vom Arbeitskopf 46 gehaltene Vorblock mit seiner unbeschichteten Unterseite auf die beschichtete Oberseite des auf der Transportvorrichtung 44 liegenden Waffelblattes von oben aufsetzt und von oben gegen dieses andrückt, ohne den Vorblock freizugeben. Erst in der jeweils letzten Blockbildungsphase wird der fertige Waffelblock in der letzten Arbeitsstellung des Arbeitskopfes 46 durch die Haltevorrichtung 47 des Arbeitskopfes 46 freigegeben.

Das Zusammenfügen kann auch von einem Hubtisch ausgeführt werden, der jeweils das auf der Transportvorrichtung 44 liegende beschichtete Waffelblatt anhebt und von unten gegen die unbeschichtete Unterseite des vom Arbeitskopf 46 in der jeweiligen Arbeitsstellung gehaltenen Vorblockes andrückt. Die Ausführung der Transportvorrichtung 44 und des dieser zugeordneten Hubtisches entsprechen den in Zusammenhang mit der Fig. 8 beschriebenen Ausführungsformen der unteren Transportvorrichtung 29 und des Hubtisches 38.

Das Zusammenfügen erfolgt jeweils innerhalb der Bewegungsbahn des Arbeitskopfes 46, der in einem der Transportvorrichtung 44 zugeordneten Arbeitsbereich sowohl auf die, vom beschichteten Waffelblatt auf der Transportvorrichtung 44 eingenommene Position, als auch auf die bereits vorhandene Höhe des von ihm gehaltenen Vorblockes ausgerichtet wird. Nach dem Zusammenfügen von Vorblock und Waffelblatt wird der Arbeitskopf 46 mit dem vom ihm gehaltenen Waffelblock aus dem Arbeitsbereich bewegt. Der Arbeitsbereich entspricht der vom Arbeitskopf 46 oberhalb der Transportvorrichtung 44 zurückgelegten Wegstrecke, die vom Heranführen des vom Arbeitskopf 46 gehaltenen Vorblockes an das jeweilige Waffelblatt bis zum Wegbewegen des Arbeitskopfes 46 mit dem um eine Waffelblattlage vergrößerten Vorblock reicht.

Bei einer einphasigen Blockbildung erfolgt das Zusammenfügen von Vorblock und Waffelblatt bei allen aufeinanderfolgenden Blockbildungen innerhalb eines einzigen stationären Arbeitsbereiches.

Bei einer zwei- oder mehrphasigen Blockbildung kann das Zusammenfügen von Vorblock und Waffelblatt bei allen Blockbildungsphasen einer Blockbildung und bei allen Blockbildungsphasen der aufeinanderfolgenden Blockbildungen innerhalb eines für alle Blockbildungsphasen gleichen, stationären Arbeitsbereiches erfolgen, wenn die Transportvorrichtung 44 jeweils für die Dauer einer Blockbildungsphase still gesetzt wird.

Läuft die Transportvorrichtung 44 während der Blockbildung weiter, so wird die Bewegung des Arbeitskopfes 46 samt dem von ihm gehaltenen Vorblock vor dem Zusammenfügen von Vorblock und Waffelblatt mit der Vorwärtsbewegung des jeweiligen Waffelblattes synchronisiert. Dies kann bei allen Blockbildungsphasen in einem stationären Arbeitsbereich erfolgen, dessen Längserstreckung in Transportrichtung der Waffelblätter größer ist als bei jeweils angehaltener Transportvorrichtung 44. Dies kann aber auch in unterschiedlichen, jeweils einer Blockbildungsphase zugeordneten Arbeitsbereichen erfolgen.

Die Bewegung des vom Arbeitskopf 46 des Blockbildners 43 jeweils gehaltenen Vorblockes mit dem auf der Transportvorrichtung 44 liegenden Waffelblatt können, so wie bei der in Figur 5 dargestellten Blockbildung, dadurch synchronisiert werden, daß der Arbeitskopf 46 synchron zu dem auf der Transportvorrichtung 44 liegenden Waffelblatt bewegt wird, bis der vom Arbeitskopf 46 gehaltenen Vorblock auf das Waffelblatt aufgesetzt wurde.

Die Bewegung des vom Arbeitskopf 46 des Blockbildners 43 jeweils gehaltenen Vorblockes mit dem auf der Transportvorrichtung 44 liegenden Waffelblatt können, so wie bei der in Figur 6 dargestellten Blockbildung, dadurch synchronisiert werden, daß der Arbeitskopf 46 des Blockbildners 43 dem auf der Transportvorrichtung 44 liegenden Waffelblatt nachgeführt wird, bis er dieses von hinten eingeholt hat. Am hinteren Rand des Arbeitskopfes 46 steht, ähnlich wie beim Übergabekopf 30 der Übergabevorrichtung der Fig. 6, ein hinterer Anschlag über die unbeschichtete Unterseite des vom Arbeitskopf 46 gehaltenen Vorblockes nach unten vor. Der Arbeitskopf 46 wird mit seinem hinteren Anschlag von hinten an die Hinterkante des Waffelblattes herangeführt und schiebt dann dieses auf der Transportvorrichtung 44 in Transportrichtung so lange weiter, bis der Arbeitskopf 46 den Vorblock auf das Waffelblatt aufgesetzt hat.

Die Bewegung des vom Arbeitskopf 46 des Blockbildners 43 jeweils gehaltenen Vorblockes mit dem auf der Transportvorrichtung 44 liegenden Waffelblatt können, so wie bei der in Figur 7 dargestellten Blockbildung, dadurch synchronisiert werden, daß das Waffelblatt dem Arbeitskopf 46 des Blockbildners 43, ähnlich wie beim Übergabekopf 30 der Übergabevorrichtung der Fig. 7, nachgeführt wird, bis es den vom Arbeitskopf 46 gehaltenen Vorblock von hinten eingeholt hat. Der Arbeitskopf 46 trägt an seinem vorderen Rand, ähnlich wie der Übergabekopf 30 der Übergabevorrichtung der Fig. 7, einen vorderen Anschlag, der über die unbeschichtete Unterseite des vom Arbeitskopf 46 gehaltenen Vorblockes nach unten vorsteht. Das Waffelblatt wird dem Arbeitskopf 46 von hinten nachgeführt, bis die Vorderkante des Waffelblattes gegen den vorderen Anschlag anstößt. Anschließend wird das Waffelblatt vom Arbeitskopf 46 so lange zurück gehalten, bis der Arbeitskopf 46 den Vorblock auf das Waffelblatt aufgesetzt hat.

Fig. 12 zeigt eine Anlage zum Herstellen von dreilagigen gefüllten ebenen Waffelblöcken 53, bei welcher unbeschichtete Waffelblätter 54 und beschichtete Waffelblätter 55 auf einer mehrteiligen Transportvorrichtung 44a, 44b, 44c einem Blockbildner zugeführt werden, von dem nur der vertikal auf und ab bewegbare Arbeitskopf 56 dargestellt ist. Der Arbeitskopf 56 besitzt eine der Transportvorrichtung 44 zugewandte, nach unten weisende Vorderseite, an der eine mit einem Luftkissen versehene Haltevorrichtung vorgesehen ist. Das Luftkissen wird zum Erfassen der unbeschichteten Oberseite eines Vorblockes mit Unterdruck und zum Abgeben des fertigen Waffelblockes mit Überdruck beaufschlagt. Der Arbeitskopf 56 wird vom Blockbildner zwischen einzelnen Arbeitsstellungen vertikal auf und ab bewegt, die von der Transportvorrichtung 44b verschieden weit entfernt sind. Der als vertikal verfahrbarer Schlitten oder als mehrachsiger Handhabungsautomat ausgebildete Blockbildner bewegt den Arbeitskopf 56 in geführten Bewegungen zwischen seinen Arbeitsstellungen hin und her.

Fig. 13 zeigt eine weitere Anlage zum Herstellen von gefüllten Waffelblöcken. Diese Anlage umfaßt eine, aus mehreren in Transportrichtung aufeinanderfolgenden Transportvorrichtungen 57a, 57b, 57c, 57d, 57e, 57f, 57g bestehende, untere Transportvorrichtung 57, die eine untere Transportebene definiert. Auf der ersten Transportvorrichtung 57a werden der Anlage unbeschichtete Waffelblätter zugeführt, die in der Anlage zu dreilagigen gefüllten Waffelblöcken zusammengefügt werden. Die zweite Transportvorrichtung 57b ist als Transportweiche ausgebildet, welche die unbeschichteten Waffelblätter in untere und obere Waffelblätter aufteilt.

Die unteren Waffelblätter werden in der unteren Transportebene an die dritte Transportvorrichtung 57c weitergegeben, die diese Waffelblätter als lückenloses Band an eine vierte Transportvorrichtung 57d weitergibt, auf der die Waffelblätter eine Streichmasse-Auftragsvorrichtung 58 passieren und an ihren Oberseiten mit Streichmasse beschichtet werden.

Die oberen Waffelblätter werden von der Transportweiche 57b an eine obere Transportvorrichtung 59 weitergegeben, die die dritte Transportvorrichtung 57c und die Streichmasse-Auftragsvorrichtung 58 überbrückt und die unbeschichteten oberen Waffelblätter zu einer am Ende der vierten Transportvorrichtung 57d angeordneten Auflegestation 60 befördert, in der die unbeschichteten oberen Waffelblätter auf einzelne, auf der vierten Transportvorrichtung 57d liegende, beschichtete, untere Waffelblätter aufgelegt werden.

Die fünfte Transportvorrichtung 57e ist Teil einer Kalibriervorrichtung 61, in der die auf die beschichteten Waffelblätter aufgelegten unbeschichteten Waffelblätter mit diesen zu zweilagigen, gefüllten Vorblöcken zusammenfügt werden, während die beschichteten Waffelblätter die Kalibriervorrichtung 61 unbehelligt passieren.

Die zweilagigen Vorblöcke und die beschichteten Waffelblätter werden auf der sechsten Transportvorrichtung 57f einem Blockbildner 62 mit einem vertikal auf und ab bewegbaren Arbeitskopf zugeführt, der in seiner ersten Arbeitsstellung einen von der sechsten Transportvorrichtung 57f angelieferten zweilagigen Vorblock an dessen unbeschichteter Oberseite erfaßt, festhält und anhebt und in seiner zweiten Arbeitsstellung den zweilagigen Vorblock auf ein von der sechsten Transportvorrichtung 57f angeliefertes, beschichtetes Waffelblatt aufsetzt. Dieses wird in einer, mit einer weiteren Kalibriervorrichtung 63 versehenen, siebenten Transportvorrichtung 57f mit dem aufgesetzten zweilagigen Vorblock zu einem dreilagigen Waffelblock verbunden.

Diese Ausführungsform des Blockbildners 62 kann durch eine der im Zusammenhang mit den Fig. 10 und 11 beschriebenen Ausführungsformen des Blockbildners 46 ersetzt werden.

## Patentansprüche

1. Verfahren zum aufeinanderfolgenden Herstellen von zweilagigen, gefüllten Waffelblöcken, die an ihrer Oberseite von einem oberen Waffelblatt und an ihrer Unterseite von einem unteren Waffelblatt begrenzt werden und zwischen ihren Waffelblättern mit Streichmasse gefüllt sind, **dadurch gekennzeichnet, daß** die für die unteren Waffelblätter der Waffelblöcke vorgesehenen Waffelblätter nacheinander als einlagige Vorblöcke in einer unteren Ebene einem Stapelort horizontal zugeführt werden, daß die für die oberen Waffelblätter der Waffelblöcke vorgesehenen Waffelblätter nacheinander als obere Waffelblätter in einer oberen Ebene dem Stapelort horizontal zugeführt werden, und daß jedes obere Waffelblatt aus der oberen Ebene entnommen, in einer geführten Bewegung mit seiner Oberseite nach unten umgedreht und mit einem Vorblock zu einem gefüllten Waffelblock zusammengefügt wird, bevor das nächste obere Waffelblatt aus der oberen Ebene entnommen, in einer geführten Bewegung mit seiner Oberseite nach unten umgedreht und mit dem nächsten Vorblock zum nächsten gefüllten Waffelblock zusammengefügt wird.

2. Verfahren nach Anspruch 1, **dadurch gekennzeichnet, daß** für die Herstellung von zweilagigen, gefüllten Hohlwaffelblöcken in der unteren Ebene an der Unterseite mit Ausbuchtungen versehene, beschichtete Waffelblätter und in der oberen Ebene an der Unterseite mit Ausbuchtungen versehene, unbeschichtete Waffelblätter zugeführt werden und daß jeweils ein an der Unterseite mit Ausbuchtungen versehenes, unbeschichtetes Waffelblatt auf den Kopf gestellt und mit einem an der Unterseite mit Ausbuchtungen versehenen, beschichteten Waffelblatt zu einem zweilagigen, gefüllten Hohlwaffelblock zusammengefügt wird, bevor das nächste, an der Unterseite mit Ausbuchtungen versehene, unbeschichtete Waffelblatt aus der oberen Ebene entnommen und auf den Kopf gestellt wird.

3. Verfahren nach Anspruch 1, **dadurch gekennzeichnet, daß** beschichtete Waffelblätter als einlagige Vorblöcke und unbeschichtete Waffelblätter als obere Waffelblätter zugeführt werden.

4. Verfahren nach Anspruch 1, **dadurch gekennzeichnet, daß** unbeschichtete Waffelblätter als einlagige Vorblöcke und beschichtete Waffelblätter als obere Waffelblätter zugeführt werden.

5. Verfahren nach Anspruch 1, **dadurch gekennzeichnet, daß** beschichtete Waffelblätter sowohl als einlagige Vorblöcke als auch als obere Waffelblätter zugeführt werden.

6. Verfahren zum aufeinanderfolgenden Herstellen von zumindest dreilagigen, gefüllten Waffelblöcken, die an ihrer Oberseite von einem obersten Waffelblatt und an ihrer Unterseite von einem untersten Waffelblatt begrenzt werden und zwischen ihren Waffelblättern mit Streichmasse gefüllt sind, **dadurch gekennzeichnet, daß** die für die untersten Waffelblätter der Waffelblöcke vorgesehenen Waffelblätter auf einer unteren Ebene als einlagige Vorblöcke einem Stapelort horizontal zugeführt werden, daß die für die übrigen Waffelblätter der Waffelblöcke vorgesehenen Waffelblätter als an ihrer Oberseite beschichtete, obere Waffelblätter auf einer oberen Ebene dem Stapelort horizontal zugeführt werden, und daß für jeden einzelnen Waffelblock zuerst ein oberes Waffelblatt aus der oberen Ebene entnommen, in einer geführten Bewegung mit seiner beschichteten Oberseite nach unten umgedreht und mit einem einlagigen Vorblock zu einem zweilagigen Vorblock zusammengefügt wird, bevor dann für jede weitere Waffelblattlage des Waffelblockes jeweils ein weiteres oberes Waffelblatt aus der oberen Ebene entnommen, in einer geführten Bewegung mit seiner beschichteten Oberseite nach unten umgedreht und mit dem vorangehend gebildeten Vorblock zusammengefügt wird.

7. Verfahren nach einem der Ansprüche 1 bis 6, **dadurch gekennzeichnet, daß** jedes obere Waffelblatt zuerst umgedreht und dann in einer geführten Bewegung abgesenkt wird.

8. Verfahren nach einem der Ansprüche 1 bis 6, **dadurch gekennzeichnet, daß** jedes obere Waffelblatt in einer geführten Bewegung zur unteren Ebene abgesenkt und während dieses Absenkens umgedreht wird.

9. Verfahren nach einem der Ansprüche 1 bis 8, **dadurch gekennzeichnet, daß** jedes umgedrehte, obere Waffelblatt mit der Bewegung eines Vorblockes synchronisiert wird, bevor es mit diesem zu einem gefüllten Waffelblock zusammengefügt wird.

10. Verfahren nach Anspruch 9, **dadurch gekennzeichnet, daß** das umgedrehte, obere Waffelblatt angehalten wird, bevor es mit dem Vorblock zu einem gefüllten Waffelblock zusammengefügt wird.

11. Verfahren nach Anspruch 9, **dadurch gekennzeichnet, daß** das obere Waffelblatt dem Vorblock in einer geführten Bewegung nachgeführt und dann mit dem Vorblock synchron mitbewegt wird, während es mit diesem zu einem gefüllten Waffelblock zusammengefügt wird.

12. Verfahren nach Anspruch 9, **dadurch gekennzeichnet, daß** der Vorblock dem umgedrehten, oberen Waffelblatt nachgeführt und dann mit dem umgedrehten, oberen Waffelblatt synchron mitbewegt wird, während er mit diesem zu einem gefüllten Waffelblock zusammengefügt wird.

13. Verfahren nach einem der Ansprüche 1 bis 12, **dadurch gekennzeichnet, daß** jedes umgedrehte, obere Waffelblatt in einer geführten Bewegung auf einen Vorblock aufgesetzt und gegen diesen nach unten angedrückt wird, um das umgedrehte, obere Waffelblatt mit dem Vorblock zu einem gefüllten Waffelblock zusammenzufügen.

14. Verfahren nach einem der Ansprüche 1 bis 12, **dadurch gekennzeichnet, daß** jeder Vorblock zu einem umgedrehten, oberen Waffelblatt angehoben und gegen dieses nach oben angedrückt wird, um den Vorblock mit dem umgedrehten, oberen Waffelblatt zu einem gefüllten Waffelblock zusammenzufügen.

15. Verfahren nach einem der Ansprüche 1 bis 14, **dadurch gekennzeichnet, daß** jedes obere Waffelblatt zentriert wird, bevor es aus der oberen Ebene entnommen wird.

16. Verfahren nach einem der Ansprüche 1 bis 15, **dadurch gekennzeichnet, daß** jedes obere Waffelblatt erst dann aus der oberen Ebene entnommen wird, wenn die Position des zugehörigen Vorblockes in der unteren Ebene mittels einer Sensorüberwachung registriert worden ist.

17. Anlage zum Herstellen von gefüllten Waffelblöcken, die an ihrer Oberseite von einem obersten Waffelblatt und an ihrer Unterseite von einem untersten Waffelblatt begrenzt werden und zwischen ihren Waffelblättern mit Streichmasse gefüllt sind, **dadurch gekennzeichnet, daß** eine untere, horizontale Transportvorrichtung (1d, 18, 29) vorgesehen ist, die in einer unteren Ebene einlagige Vorblöcke einem Stapelort zuführt und fertige Waffelblöcke aus dem Stapelort abtransportiert, daß oberhalb der unteren Transportvorrichtung (1d, 18, 29) eine obere, horizontale Transportvorrichtung (2, 17, 23) vorgesehen ist, die vor dem Stapelort endet und obere Waffelblätter in einer oberen Ebene dem Stapelort zuführt, und daß dem Stapelort ein die einzelnen Waffelblöcke jeweils in einer oder mehreren aufeinanderfolgenden Blockbildungsphasen bildender Blockbildner (5) zugeordnet ist, der einen an seiner Vorderseite mit einer Haltevorrichtung (31) für die oberen Waffelblätter (16, 24) versehenen, mehrachsig räumlich frei bewegbaren Übergabekopf (7, 19, 30, 30a, 30b) besitzt, der für jede einzelne Blockbildungsphase, während der ein oberes Waffelblatt (16, 24) mit seiner Oberseite nach unten umgedreht, zur unteren Transportvorrichtung (1d, 18, 29) abgesenkt und mit einem Vorblock zu einem gefüllten Waffelblock zusammengefügt wird, aus einer dem Ende der oberen Transportvorrichtung (2, 17, 23) benachbarten Aufnahmestellung (20, 30a) mit nach oben weisender Vorderseite in eine der unteren Transportvorrichtung (1d, 18, 29) benachbarte Abgabestellung (21, 30b) mit nach unten weisender Vorderseite räumlich frei bewegbar ist.

18. Anlage nach Anspruch 17, **dadurch gekennzeichnet, daß** die Haltevorrichtung (31) des Übergabekopfes (30a, 30b) ein mit den unbeschichteten Unterseiten der oberen Waffelblätter (16, 24) in Eingriff bringbares Luftkissen besitzt, das zum Erfassen eines oberen Waffelblattes (16, 24) mit Unterdruck beaufschlagbar und zum Abgeben eines oberen Waffelblattes (16, 24) mit Überdruck beaufschlagbar ist.

19. Anlage nach Anspruch 17 oder 18, **dadurch gekennzeichnet, daß** der Übergabekopf (30a, 30b) einen über seine Vorderseite vorstehenden, vorderen Anschlag (37) besitzt, der am vorderen Rand des Übergabekopfes (30a, 30b) angeordnet ist und in der Abgabestellung (30b) des Übergabekopfes (30a, 30b) von oben über die Vorderkante eines auf der unteren Transportvorrichtung (1d, 18, 29) liegenden Vorblockes (27) nach unten vorsteht.

20. Anlage nach Anspruch 17 oder 18, **dadurch gekennzeichnet, daß** der Übergabekopf (30a, 30b) einen über seine Vorderseite vorstehenden hinteren Anschlag (36) besitzt, der am hinteren Rand des Übergabekopfes (30a, 30b) angeordnet ist und in der Abgabestellung (30b) des Übergabekopfes (30a, 30b) von oben über die Hinterkante eines auf der unteren Transportvorrichtung (1d, 18, 29) liegenden Vorblockes (27) nach unten vorsteht.

21. Anlage nach Anspruch 17 oder 18, **dadurch gekennzeichnet, daß** unterhalb der unteren Transportebene ein der Abgabestellung (30b) des Übergabekopfes (30a, 30b) zugeordneter, vertikal auf und ab bewegbarer Hubtisch (38, 42) vorgesehen ist, der eine zur unteren Transportebene parallele, nach oben weisende Auflagefläche (39) für die Vorblöcke (27) und einen zur unteren Transportebene senkrechten Anschlag (40) für die Vorderkanten der Vorblöcke (27) besitzt.

22. Anlage nach einem der Ansprüche 17 bis 21, **dadurch gekennzeichnet, daß** die Übergabevorrichtung (5) als ein der unteren Transportvorrichtung (1) zugeordneter, mehrachsiger Handhabungsautomat (11) ausgebildet ist, der einen um eine vertikale Achse (12) drehbaren und um eine horizontale Achse (13) knickbaren Ausleger (10) mit einem, um eine zur Knickachse (13) senkrechte Achse drehbaren Arm (10b) besitzt, an dessen freiem Ende der Übergabekopf (7) angebracht ist.

23. Verfahren zum Herstellen von gefüllten Waffelblöcken, die an ihrer Oberseite von einem obersten Waffelblatt und an ihrer Unterseite von einem untersten Waffelblatt begrenzt werden und zwischen ihren Waffelblättern mit Streichmasse gefüllt sind, wobei ein an seiner Oberseite und Unterseite unbeschichteter Vorblock des zu bildenden Waffelblockes und zumindest ein beschichtetes Waffelblatt nacheinander in der gleichen Transportebene einem Stapelort zugeführt werden, **dadurch gekennzeichnet, daß** der Vorblock am Stapelort zumindest einmal in einer geführten Bewegung angehoben und mit seiner unbeschichteten Unterseite mit der beschichteten Oberseite des nächsten, dem Stapelort in der Transportebene zugeführten, beschichteten Waffelblattes zu einem gefüllten Waffelblock zusammengefügt wird.

24. Verfahren nach Anspruch 23, **dadurch gekennzeichnet, daß** der Vorblock in einer geführten Bewegung angehoben und mit dem nächsten, in der Transportebene zugeführten, beschichteten Waffelblatt zu einem weiteren Vorblock zusammengefügt wird und daß für jede weitere Waffelblattlage des zu bildenden Waffelblockes jeweils der vorangehend gebildete Vorblock in einer geführten Bewegung angehoben und mit dem nächsten, in der Transportebene zugeführten, beschichteten Waffelblatt zu einem gefüllten Waffelblock zusammengefügt wird.

25. Verfahren nach Anspruch 23 oder 24, **dadurch gekennzeichnet, daß** zum Zusammenfügen von Vorblock und beschichtetem Waffelblatt jeweils der Vorblock in einer geführten Bewegung von oben auf das beschichtete Waffelblatt aufgesetzt und gegen dieses nach unten angedrückt wird.

26. Verfahren nach Anspruch 23 oder 24, **dadurch gekennzeichnet, daß** zum Zusammenfügen von Vorblock und beschichtetem Waffelblatt jeweils das beschichtete Waffelblatt aus der Transportebene angehoben und von unten gegen den in einer Haltestellung festgehaltenen Vorblock angedrückt wird.

27. Verfahren nach einem der Ansprüche 23 bis 26, **dadurch gekennzeichnet, daß** der Vorblock mit der Bewegung des nächsten beschichteten Waffelblattes synchronisiert wird, bevor er mit diesem zu einem gefüllten Waffelblock zusammengefügt wird.

28. Verfahren nach Anspruch 27, **dadurch gekennzeichnet, daß** der Vorblock angehalten wird, bevor er mit dem beschichteten Waffelblatt zu einem gefüllten Waffelblock zusammengefügt wird.

29. Verfahren nach Anspruch 27, **dadurch gekennzeichnet, daß** der Vorblock dem nächsten beschichteten Waffeiblatt in einer geführten Bewegung nachgeführt und dann mit dem beschichteten Waffelblatt synchron mitbewegt wird, während er mit diesem zu einem gefüllten Waffelblock zusammengefügt wird.

30. Verfahren nach Anspruch 27, **dadurch gekennzeichnet, daß** das nächste beschichtete Waffelblatt dem Vorblock nachgeführt und dann mit diesem synchron mitbewegt wird, während es mit dem Vorblock zu einem gefüllten Waffelblock zusammengefügt wird.

31. Verfahren nach einem der Ansprüche 23 bis 30, **dadurch gekennzeichnet, daß** zuerst außerhalb des Stapelortes beschichtete und unbeschichtete Waffelblätter paarweise zu zweilagigen, mit Streichmasse gefüllten Waffelblöcken zusammengefügt werden, welche dem Stapelort als Vorblöcke für die zu bildenden Waffelblöcke zugeführt werden.

32. Verfahren nach einem der Ansprüche 23 bis 30, **dadurch gekennzeichnet, daß** dem Stapelort unbeschichtete Waffelblätter als Vorblöcke für die zu bildenden Waffelblöcke zugeführt werden.

33. Anlage zum Herstellen von gefüllten Waffelblöcken, die an ihrer Oberseite von einem obersten Waffelblatt und an ihrer Unterseite von einem untersten Waffelblatt begrenzt werden und zwischen ihren Waffelblättern mit Streichmasse gefüllt sind, **dadurch gekennzeichnet, daß** eine horizontale Transportvorrichtung (44, 57) vorgesehen ist, die die zu Waffelblöcken zusammenzufügenden Vorblöcke (54) und beschichteten Waffelblätter (55) in einer Transportebene nacheinander einem Stapelort zuführt und die fertigen Waffelblöcke auf der gleichen Transportebene abtransportiert, und daß der Transportvorrichtung (44, 57) am Stapelort ein jeden Waffelblock in einer oder mehreren aufeinanderfolgenden Blockbildungsphasen bildender Blockbildner (43, 62) zugeordnet ist, der einen an seiner nach unten weisenden Vorderseite mit einer Haltevorrichtung (47) für die Vorblöcke (54) versehenen Arbeitskopf (46, 56) besitzt, der gegenüber der Transportvorrichtung (44, 57) in eine Arbeitsstellung zum Erfassen eines Vorblockes (54) absenkbar und für die einzelnen Blockbildungsphasen, bei denen der von der Haltevorrichtung (47) festgehaltene Vorblock angehoben und mit dem nächsten beschichteten Waffelblatt zu einem gefüllten Waffelblock zusammengefügt wird, in geführten Bewegungen in von der Transportvorrichtung (44, 57) unterschiedlich weit entfernte, jeweils einer Blockbildungsphase zugeordnete Arbeitsstellungen bewegbar ist.

34. Anlage nach Anspruch 33, **dadurch gekennzeichnet, daß** die Haltevorrichtung (47) des Arbeitskopfes (46, 56) ein mit der unbeschichteten Oberseite eines Vorblockes (54) in Eingriff bringbares Luftkissen besitzt, das zum Erfassen eines Vorblockes (54) mit Unterdruck beaufschlagbar und zum Abgeben des fertigen Waffelblockes (53) mit Überdruck beaufschlagbar ist.

35. Anlage nach Anspruch 33 oder 34, **dadurch gekennzeichnet, daß** der Arbeitskopf (46, 56) einen über seine Vorderseite vorstehenden, vorderen Anschlag besitzt, der am vorderen Rand des Arbeitskopfes (46, 56) über einen von der Haltevorrichtung (47) gehaltenen Vorblock (54) nach unten vorsteht und der Vorderkante eines auf der Transportvorrichtung (44, 57) liegenden, beschichteten Waffelblattes (55) zugeordnet ist.

36. Anlage nach Anspruch 33 oder 34, **dadurch gekennzeichnet, daß** der Arbeitskopf (46, 56) einen über seine Vorderseite vorstehenden, hinteren Anschlag besitzt, der am hinteren Rand des Arbeitskopfes (46, 56) über einen von der Haltevorrichtung (47) gehaltenen Vorblock (54) nach unten vorsteht und der Hinterkante eines auf der Transportvorrichtung (44, 57) liegenden, beschichteten Waffelblattes (55) zugeordnet ist.

37. Anlage nach Anspruch 33 oder 34, **dadurch gekennzeichnet, daß** unterhalb der Transportebene ein dem Arbeitskopf (46, 56) zugeordneter, vertikal auf und ab bewegbarer Hubtisch (38, 42) vorgesehen ist, der eine zur Transportebene parallele, nach oben weisende Auflagefläche (39) und einen über die Auflagefläche (39) nach oben vorstehenden, zur Transportebene senkrechten Anschlag (40) besitzt.

38. Anlage nach einem der Ansprüche 33 bis 37, **dadurch gekennzeichnet, daß** der Blockbildner (43) als ein der Transportvorrichtung (44) zugeordneter Handhabungsautomat (49) ausgebildet ist, der einen um eine horizontale Achse (51) knickbaren Ausleger (48) besitzt, an dessen freiem Ende der Arbeitskopf (46) angebracht ist.

39. Anlage nach Anspruch 38, **dadurch gekennzeichnet, daß** der den Arbeitskopf (46) tragende Ausleger (48) des Handhabungsautomaten (49) um eine vertikale Achse (50) drehbar ist.

40. Anlage nach einem der Ansprüche 33 bis 39, **dadurch gekennzeichnet, daß** ein dem Blockbildner (62) vorgelagerter Anlagenabschnitt zum Herstellen von zweilagigen, gefüllten Vorblöcken vorgesehen ist, welcher eine oberhalb der Transportvorrichtung (57) angeordnete, obere Transportvorrichtung (59) für die Zufuhr von unbeschichteten Waffelblättern, eine der oberen Transportvorrichtung (59) nachgelagerte Station (60) zum Auflegen der unbeschichteten Waffelblätter auf einzelne, auf der Transportvorrichtung (57) liegende, beschichtete Waffelblätter und eine die beschichteten und unbeschichteten Waffelblätter zu zweilagigen, gefüllten Waffelblöcken zusammenfügende Kalibriervorrichtung (61) umfaßt.

## Claims

1. A method for the consecutive production of two-layer filled wafer blocks bounded on their upper face by an upper wafer leaf and on their under side by a bottom wafer leaf and which are filled with a spreadable composition between their wafer leaves, **characterised in that** the wafer leaves provided for the bottom wafer leaves of the wafer blocks are horizontally fed one after another as single-layer pre-blocks in a lower level to a stacking location and **in that** the wafer leaves provided for the upper waver leaves of the wafer blocks are fed horizontally one after another as upper wafer leaves in an upper level to the stacking location and **in that** each upper wafer leaf is taken from the upper level, and, in a guided movement, is turned over so that its upper side is facing downwards and is combined with a pre-block to form a filled wafer block, before the next upper wafer leaf is taken from the upper level and, in a guided movement, is turned over so that its upper face is downwards and is combined with the next pre-block to form the next filled wafer block.

2. A method according to claim 1, **characterised in that** for producing two-layer filled hollow blocks, coated wafer leaves in the lower level provided on their under side with indentations and uncoated wafer leaves in the upper level provided with indentations on their under side, are fed and **in that** in each case one uncoated wafer leaf which has indentations on its under side is turned upwards and is combined with a coated wafer leaf which has indentations on its under side to form a two-layer filled hollow wafer block before the next uncoated wafer leaf which has indentations on its under side is withdrawn from the upper level and turned over.

3. A method according to claim 1, **characterised in that** coated wafer leaves are fed as single layer pre-blocks and uncoated wafer leaves are fed as upper wafer leaves.

4. A method according to claim 1, **characterised in that** uncoated wafer leaves are fed as single layer pre-blocks and coated wafer leaves are fed as upper wafer leaves.

5. A method according to claim 1, **characterised in that** coated wafer leaves are fed both as single layer pre-blocks and also as upper wafer leaves.

6. A method for the consecutive production of at least three-layer filled wafer blocks bounded on their upper side by a topmost wafer leaf and on their under side by a bottommost wafer leaf and are filled with spreadable composition between their wafer leaves, **characterised in that** the wafer leaves provided for the bottommost wafer leaves of the wafer blocks are horizontally fed to a stacking location on a lower level as single-layer pre-blocks and **in that** the wafer leaves provided for the other wafer leaves of the wafer blocks are fed horizontally as upper wafer leaves which are coated on their upper face on an upper level to the stacking location and **in that** for each individual wafer block firstly an upper wafer leaf is taken from the upper level, and, in a guided movement, turned over so that its coated upper side is facing downwards and is combined with a single-layer pre-block to produce a two-layer pre-block, before then, for each further layer of wafer leaves of the wafer block, in each case one further upper wafer leaf is taken from the upper level and, in a guided movement, reversed so that its coated upper side is facing downwards and combined with the precedently formed pre-block.

7. A method according to one of claims 1 to 6, **characterised in that** each upper wafer leaf is first turned over and is then lowered in a guided movement.

8. A method according to one of claims 1 to 6, **characterised in that** each upper wafer leaf is lowered to the lower level in a guided movement and is turned over during this lowering.

9. A method according to one of claims 1 to 8, **characterised in that** each turned-over upper wafer leaf is synchronised with the movement of a pre-block before it is combined with it to produce a filled wafer block.

10. A method according to claim 9, **characterised in that** the turned-over upper wafer leaf is stopped before it is combined with the pre-block to produce a filled wafer block.

11. A method according to claim 9, **characterised in that** the upper wafer leaf follows the pre-block in a guided movement and is then moved jointly in synchronism with the pre-block while it s combined with it to produce a filled wafer block.

12. A method according to claim 9, **characterised in that** the pre-block follows the turned-over upper wafer leaf and is then moved jointly and in synchronism with the turned-over upper wafer leaf while being combined with it to produce a filled wafer block.

13. A method according to one of claims 1 to 12, **characterised in that** each turned-over upper wafer leaf is, in a guided movement, placed on a pre-block and is pressed downwards against it in order to combine the turned-over upper wafer leaf with the pre-block to produce a filled wafer block.

14. A method according to one of claims 1 to 12, **characterised in that** each pre-block is raised to and pressed upwards against a turned-over upper wafer leaf in order to combine the pre-block with the turned-over upper wafer leaf to produce a filled wafer block.

15. A method according to one of claims 1 to 14, **characterised in that** each upper wafer leaf is centred before it is withdrawn from the upper level.

16. A method according to one of claims 1 to 15, **characterised in that** each upper wafer leaf is only taken from the upper level when the position of the associated pre-block in the lower level has been registered by means of a monitoring sensor.

17. A plant for producing filled wafer blocks which are bounded on their upper side by a topmost wafer leaf and on their under side by a bottommost wafer leaf and which are filled with a spreadable composition between their wafer leaves, **characterised in that** a bottom horizontal transport device (1d, 18, 29) is provided which in a lower level feeds single layer pre-blocks to a stacking location and carries finished wafer blocks away from the staple location and **in that** there is above the bottom transport device (1d, 18, 29) an upper horizontal transport device (2, 17, 23) which ends upstream of the stacking location and feeds upper wafer leaves in an upper level to the stacking location and **in that**, associated with the stacking location, there is a block former (5) which forms the individual wafer blocks in one or a plurality of consecutive block-forming phases and which has a transfer head (7, 19, 30, 30a, 30b) adapted for multi-axial freedom of movement and which has on its front face a device (31) for holding the upper wafer leaves (16, 24) and which for each individual block-forming phase, while an upper wafer leaf (16, 24) is being turned over is that its upper face is downwards, is lowered to the bottom transport device (1d, 18, 29) and is combined with a pre-block to produce a filled wafer block, and is adapted for free spatial movement out of a receiving position (20, 30a) adjacent to the end of the upper transport device (2, 17, 23) with an upwardly facing front face into a delivery position (21, 30b) adjacent the bottom transport device (1d, 18, 29) with the front face directed downwards.

18. A plant according to claim 17, **characterised in that** the holding device (31) of the transfer head (30a, 30b) has, adapted to be engaged with the uncoated under sides of the upper wafer leaves (16, 24), an air cushion which can be subjected to negative pressure in order to grip an upper wafer leaf (16,24) and expose to above-atmospheric pressure in order to deliver an upper wafer leaf (16, 24).

19. A plant according to claim 17 or 18, **characterised in that** the transfer head (30a, 30b) has, projecting beyond its front face, a front abutment (37) which is disposed at the front edge of the transfer head (30a, 30b) and which, in the delivery position (30b) of the transfer head (30a, 30b) projects downwards from above beyond the front edge of a pre-block which is on the bottom transport device (1d, 18, 29).

20. A plant according to claim 17 or 18, **characterised in that** the transfer head (30a, 30b) has, projecting beyond its front face, a rear abutment (36) which is disposed at the rear edge of the transfer head (30a, 30b) and which, in the delivery position (30b) of the transfer head (30a, 30b) projects downwards from above beyond the rear edge of a pre-block (27) which is on the bottom transport device (1d, 18, 29).

21. A plant according to claim 17 or 18, **characterised in that** there is below the bottom transport level and associated with the delivery position (30b) of the transfer head (30, 30b) a vertically upwardly and downwardly movable lifting table (38,42), which has, parallel with the lower transport level, an upwardly directed supporting surface (39) for the pre-blocks (27) and, for the front edges of the pre-block (27), an abutment (40) which is at right-angles to the lower transport level.

22. A plant according to one of claims 17 to 21, **characterised in that** the transfer device (5) is constructed as a multi-axial automatic handling means (11) associated with the lower transport device (1) and which has an arm (10b) adapted to rotate about an axis at right-angles to the bending axis (13) and an extension arm (10) adapted to be bent about a horizontal axis (13) and **in that** the transfer head (7) is at the free end of the rotatable arm (10b).

23. A method of producing filled wafer blocks which are bounded at their upper face by an uppermost wafer leaf and on their under side by a bottommost wafer leaf and which are filled with spreadable composition between their wafer leaves, whereby a pre-block uncoated on its upper and under sides and which is part of the wafer block being formed, and at least one coated wafer leaf, are fed one after another and in the same transport plane to a stacking location,
**characterised in that** the pre-block at the stacking location is raised at least one in a guided movement, its uncoated under side being combined with the coated upper side of the next coated wafer leaf which is fed to the stacking location in the transport level to produce a filled wafer block.

24. A method according to claim 23, **characterised in that** the pre-block is raised in a first guided movement and combined with the next coated wafer leaf which is supplied in the transport level to produce a further pre-block and **in that** for each further layer of wafer leaves of the wafer block which is to be formed, in each case the precedently formed pre-block is lifted in a guided movement and combined with the next coated wafer leaf fed in the transport level to produce a filled wafer block.

25. A method according to claim 23 or 24, **characterised in that** for combining pre-block and coated wafer leaf, in each case the pre-block is, in a guided movement, placed down onto and pressed downwards onto the coated wafer leaf.

26. A method according to claim 23 or 24, **characterised in that** for combining pre-block and coated wafer leaf, in each case the coated wafer leaf is lifted out of the transport level and is pressed downwards against the pre-block which is held fast in a holding position.

27. A method according to one of claims 23 to 26, **characterised in that** the pre-block is synchronised with the movement of the next coated wafer leaf before it is combined therewith to produce a filled wafer block.

28. A method according to claim 27, **characterised in that** the pre-block is stopped before it is combined with the coated wafer leaf to produce a filled wafer block.

29. A method according to claim 27, **characterised in that** the pre-block follows the next coated wafer leaf in a guided movement and is then moved jointly and in synchronism with the coated wafer leaf while it is being combined therewith to produce a filled wafer block.

30. A method according to claim 27, **characterised in that** the next coated wafer leaf follows the pre-block and is then moved in synchronism with it while it is being combined with the pre-block to produce a filled wafer block.

31. A method according to one of claims 23 to 30, **characterised in that**, first of all, outside the stacking location, coated and uncoated wafer leaves are combined in pairs to produce two-layer wafer blocks filled with spreadable composition and which are fed to the stacking location as pre-blocks for the wafer blocks which are to be formed.

32. A method according to one of claims 23 to 30, **characterised in that** uncoated wafer leaves are fed to the stacking location as pre-blocks for the wafer blocks which are to be formed.

33. A plant for producing filled wafer blocks which are bounded on their upper side by a topmost wafer leaf and on their under side by a bottommost wafer leaf and which are filled with spreadable composition between their wafer leaves, **characterised in that** a horizontal transport device (44, 57) is provided which feeds the pre-blocks (54) which are to be combined to produce wafer blocks and uncoated wafer leaves (55) are fed one after another and in one transport level to a stacking location and the completed wafer blocks are carried away on the same transport level and **in that** associated with the transport device (44, 57) there is at the stacking location a block former (43, 62) which forms each wafer block in one or a plurality of successive block-forming phases and which has a working head (46, 56) provided on its downwardly directed front face with a holding device (47) for the pre-blocks (54) which can be lowered opposite the transport device (44, 57) into a working position for grasping pre-block (54) and which, for the individual block-forming phases in which the pre-block gripped by the holding device (47) is raised and combined with the next coated wafer leaf to produce a filled wafer block, is adapted for guided movements into working positions, each of which is associated with a block-forming phase, the said positions being at varying distances from the transport device (44, 57).

34. A plant according to claim 33, **characterised in that** the holding device (47) of the working head (46, 56) has an air cushion which can be brought into engagement with the uncoated upper side of a pre-block (54) and which can be subjected to negative pressure in order to pick up a pre-block (54) and subjected to above-atmospheric pressure in order to deliver the finished wafer block (53).

35. A plant according to claim 33 to 34, **characterised in that** the working head (46, 56) has, projecting beyond its front face, a front abutment which, on the front edge of the working head (46, 56) projects downwards beyond a pre-block (54) which is held by the holding device (47) and which is associated with the front edge of a coated wafer leaf (5) located on the transport device (44, 57).

36. A plant according to claim 33 or 34, **characterised in that** the working head (46, 56) has, projecting beyond its front side, a rear abutment which, at the rear edge of the working head (46, 56) projects downwards beyond a pre-block (54) which is held by the holding device (47) and which is associated with the rear edge of a coated wafer leaf (55) located on the transport device (44, 57).

37. A plant according to claim 33 or 34, **characterised in that** under the transport level there is, associated with the working head (46, 56), a vertically upwardly and downwardly movable lifting table (38, 2) which has, parallel with the transport level, an upwardly directed supporting surface (39) and an abutment (40) at right-angles to the transport level and projecting above beyond the supporting surface (39).

38. A plant according to one of claims 33 to 37, **characterised in that** the block former (43) is constructed as an automatic handling means (49) associated with the transport device (44) and which has an extension arm (48) adapted to be bent about a horizontal axis (51) and at the free end of which there is the working head (46).

39. A plant according to claim 38, **characterised in that** the extension arm (48) of the automatic handling means (49) which carries the working head (46) is rotatable about a vertical axis (50).

40. A plant according to one of claims 33 to 39, **characterised in that** on the upstream side of the block former (62) is a section of the plant for the production of two-layer filled pre-blocks which comprises, disposed above the transport device (57), an upper transport device (59) for feeding uncoated wafer leaves, a station (60) downstream of the upper transport device (59) for placing the uncoated wafer leaves on individual coated wafer leaves located on the transport device (57), and a calibrating device (61) which combines the coated and uncoated wafer leaves to form two-layer filled wafer blocks.

## Revendications

1. Procédé de fabrication par étapes successives de blocs gaufrés remplis, à deux couches, qui sont délimités, sur leur face supérieure, par une feuille gaufrée supérieure et, sur leur face inférieure, par une feuille gaufrée inférieure et étant enduits d'une masse d'enduction entre leurs feuilles gaufrées, **caractérisé en ce que** les feuilles gaufrées prévues pour les feuilles gaufrées inférieures des blocs gaufrés sont amenées horizontalement les unes après les autres à un site d'empilage en un plan inférieur, sous forme de blocs préliminaires à une couche, **en ce que** les feuilles gaufrées prévues pour les feuilles gaufrées supérieures des blocs gaufrés sont amenées les unes après les autres horizontalement au site d'empilage, à titre de feuille gaufrée supérieure, dans un plan supérieur, et **en ce que** chaque feuille gaufrée supérieure est prélevée du plan supérieur, est retournée avec sa face supérieure tournée vers le bas, en un mouvement guidé, et est assemblée avec un bloc préliminaire pour former un bloc gaufré rempli, avant que la feuille gaufrée supérieure immédiatement la suivante soit prélevée du plan supérieur, soit tournée en ayant sa face supérieure orientée vers le bas, en un mouvement guidé, et soit assemblée au bloc préliminaire venant immédiatement ensuite, pour former le bloc gaufré rempli, immédiatement subséquent.

2. Procédé selon la revendication 1, **caractérisé en ce que**, pour effectuer la fabrication de blocs gaufrés creux remplis à deux couches, on amène, dans le plan inférieur, des feuilles gaufrées revêtues, munies en face inférieure de bosses sortantes en face inférieure et, dans le plan supérieur, des feuilles gaufrées non revêtues, munies en face inférieure de bosses sortantes et on place chaque fois en position retournée une feuille gaufrée munie de bosses sortantes en face inférieure, non revêtue, et on l'assemble avec une feuille gaufrée revêtue, munie de bosses sortantes en face inférieure, pour former un bloc gaufré creux rempli à deux couches, avant que la tranche de gaufre non revêtue venant immédiatement ensuite, munie de bosses sortantes en face inférieure, soit prélevée du plan supérieur et retournée.

3. Procédé selon la revendication 1, **caractérisé en ce que** les feuilles gaufrées revêtues sont amenées à titre de feuilles gaufrées supérieures sous forme de blocs préliminaires à une couche et de feuille gaufrée non revêtue.

4. Procédé selon la revendication 1, **caractérisé en ce que** les feuilles gaufrées non revêtues, sous la forme de blocs préliminaires à une couche, et des feuilles gaufrées revêtues, faisant office de feuille gaufrée supérieure, sont amenées.

5. Procédé selon la revendication 1, **caractérisé en ce que** des feuilles gaufrées revêtues sont amenées, tant à titre de blocs préliminaires à une couche, qu'également à titre de feuilles gaufrées supérieures.

6. Procédé pour la fabrication par étapes successives de blocs gaufrés remplis, au moins à trois couches, qui sont délimités, sur leur face supérieure par une feuille gaufrée supérieure la plus au-dessus et, sur leur face inférieure par une feuille gaufrée la plus en-dessous et étant remplis d'une masse d'enduction entre leurs tranches de gaufre, **caractérisé en ce que** les feuilles gaufrées, prévues pour les feuilles gaufrées les plus inférieures des blocs gaufrés, sont amenées horizontalement à un site d'empilage sur un plan inférieur, à titre de blocs préliminaires à une couche, **en ce que** les feuilles gaufrées prévues pour produire les autres feuilles gaufrées des blocs gaufrés sont amenées horizontalement sur un plan supérieur du site d'empilage, à titre de feuilles gaufrées supérieures, enduites sur leur face supérieure, et **en ce que** pour chaque bloc gaufré individuel amené, d'abord une feuille gaufrée supérieure est prélevée du plan supérieur, est retournée avec sa face supérieure enduite tournée vers le bas, en effectuant un mouvement guidé, et est conduit avec un bloc préliminaire à une couche vers un bloc préliminaire à deux couches, avant que, ensuite, pour chaque couche de feuille gaufrée supplémentaire du bloc gaufré, chaque fois une autre feuille gaufrée supérieure soit prélevée du plan supérieur, soit tournée en ayant sa face supérieure enduite orientée vers le bas, en un mouvement guidé, et soit assemblée au bloc préliminaire formé préalablement.

7. Procédé selon l'une des revendications 1 à 6, **caractérisé en ce que** chaque feuille gaufrée supérieure est d'abord retournée et est ensuite abaissée en un mouvement guidé.

8. Procédé selon l'une des revendications 1 à 6, **caractérisé en ce que** chaque feuille gaufrée supérieure est abaissée en un mouvement guidé vers le plan inférieur et est retournée pendant cette phase d'abaissement.

9. Procédé selon l'une des revendications 1 à 8, **caractérisé en ce que** chaque feuille gaufrée supérieure retournée est synchronisée avec le déplacement d'un bloc préliminaire avant d'être assemblée avec celui-ci pour former un bloc gaufré rempli.

10. Procédé selon la revendication 9, **caractérisé en ce que** la feuille gaufrée supérieure retournée est arrêtée avant d'être assemblée avec le bloc préliminaire, pour donner un bloc gaufré rempli.

11. Procédé selon la revendication 9, **caractérisé en ce que** la feuille gaufrée supérieure est restituée au bloc préliminaire dans un mouvement guidé et est ensuite déplacée conjointement, de façon synchrone avec le bloc préliminaire, tandis qu'elle est assemblée avec celui-ci pour donner un bloc gaufré rempli.

12. Procédé selon la revendication 9, **caractérisé en ce que** le bloc préliminaire est restitué à la feuille de gaufre supérieure retournée dans un déplacement guidé et est ensuite déplacé conjointement de façon synchrone avec la feuille gaufrée supérieure retournée, tandis qu'elle est assemblée à celle-ci pour former un bloc gaufré rempli.

13. Procédé selon l'une des revendications 1 à 12, **caractérisé en ce que** chaque feuille gaufrée supérieure retournée est posée sur un bloc préliminaire, en effectuant un mouvement guidé, et est pressée contre celui-ci vers le bas pour assembler la feuille gaufrée supérieure retournée au bloc préliminaire pour donner un bloc gaufré rempli.

14. Procédé selon l'une des revendications 1 à 12, **caractérisé en ce que** chaque bloc préliminaire est levé vers une feuille gaufrée supérieure retournée et est pressé contre celle-ci vers le haut pour assembler le bloc préliminaire avec la feuille gaufrée supérieure retournée, pour donner un bloc gaufré rempli.

15. Procédé selon l'une des revendications 1 à 14, **caractérisé en ce que** chaque feuille gaufrée supérieure est centrée avant d'être prélevée du plan supérieur.

16. Procédé selon l'une des revendications 1 à 15, **caractérisé en ce que** chaque feuille gaufrée supérieure est ensuite prélevée du plan supérieur lorsque la position du bloc préliminaire afférent est détecté dans le plan inférieur à l'aide d'une surveillance par capteur.

17. Installation de fabrication de blocs gaufrés remplis qui sont limités à leur face supérieure par une feuille gaufrée la plus supérieure et à leur face inférieure par une feuille gaufrée la plus inférieure, et sont remplis d'une masse d'enduction entre leurs feuilles gaufrées, **caractérisé en ce qu'**est prévu un dispositif de transport horizontal inférieur (1d, 18, 29), qui amène à un site d'empilage les blocs préliminaire à une couche, dans un plan inférieur, et évacue les blocs gaufrés terminés hors du site d'empilage, **en ce qu'**au-dessus du dispositif de transport inférieur (1d, 18, 29) est prévu un dispositif de transport (2, 17, 23) horizontal supérieur, qui s'achève devant le site d'empilage et amène au site d'empilage les feuilles gaufrées supérieures, en un plan supérieur, et ce qu'est associé au site d'empilage un formateur de blocs (5) qui forme chaque bloc gaufrés chaque fois en une ou plusieurs phases de formation en blocs successives, formateur de blocs (5) qui comporte une tête de transfert (7, 19, 30, 30a, 30b) munie sur sa face avant d'un dispositif de maintien (31) pour les feuilles gaufrées supérieures (16, 24), la tête de transfert étant déplaçable librement dans l'espace selon plusieurs axes, la tête de transfert étant descendue vers le dispositif de transport inférieur (1d, 18, 29), pendant que la tête de transfert retourne une feuille de gaufre supérieure (16, 24) avec sa face supérieure vers le bas et pour chaque phase de formation de blocs spécifiques et est conduit avec un bloc préliminaire pour former un bloc gaufré rempli, depuis une position de réception (20, 30a) voisine de l'extrémité du dispositif de transport supérieur (2, 17, 23), en étant déplaçable librement dans l'espace, avec la face avant tournée vers le haut, en une position de délivrance (21, 30b) voisine du dispositif de transport inférieur (1d, 18, 29) avec sa face avant tournée vers le bas.

18. Installation selon la revendication 17, **caractérisé en ce que** le dispositif de maintien (31) de la tête de transfert (30a, 30b) comporte un coussin d'air pouvant être mis en prise avec les faces inférieures non revêtues des feuilles gaufrées (16, 24) supérieures, coussin d'air qui est susceptible d'être sollicité par une dépression pour saisir une feuille gaufrée supérieure (16, 24) et est susceptible d'être sollicité par une surpression dans le but de délivrer une feuille gaufrée supérieure (16, 24).

19. Installation selon la revendication 17 ou 18, **caractérisé en ce que** la tête de transfert (30a, 30b) comporte une butée avant (37) en saillie de sa face avant, qui est disposée sur le bord avant de la tête de transfert (30a, 30b) et qui, à la position de délivrance (30b) de la tête de transfert (30a, 30b), fait saillie depuis le haut vers le bas sur l'arête avant d'un bloc préliminaire (27) placé sur le dispositif de transport inférieur (1d, 18, 29).

20. Installation selon la revendication 17 ou 18, **caractérisé en ce que** la tête de transfert (30a, 30b) comporte une butée arrière (36) en saillie sur sa face avant, butée arrière disposée sur le bord arrière de la tête de transfert (30a, 30b) et dans la position de délivrance (30b) de la tête de transfert (30a, 30b) fait saillie vers le bas depuis le haut sur l'arête arrière d'un bloc préliminaire (27) placé sur le dispositif de transport inférieur (1d, 18, 29).

21. Installation selon la revendication 17 ou 18, **caractérisée en ce qu'**au-dessous du plan de transport inférieur est prévue une table de levage (38, 42), levable et abaissable verticalement, associée à la position de délivrance (30b) de la tête de transfert (30a, 30b), table de levage qui comporte une face de pose (39) tournée vers le haut, parallèle au plan de transport inférieur, pour les blocs préliminaires (27) et une butée (40) perpendiculaire par rapport au plan de transport inférieur, pour les arêtes avant des blocs préliminaires (27).

22. Installation selon l'une des revendications 17 ou 21, **caractérisée en ce que** le dispositif de transfert (5) est réalisé sous la forme de robot de manipulation (11) à plusieurs axes, associé au dispositif de transport inférieur (1), robot de manipulation qui comporte un bras articulé (10) pouvant être tourné autour d'un axe vertical (12) et pouvant être fléchi autour d'un axe horizontal (13), avec un bras (10b) pouvant tourner autour d'un axe perpendiculaire par rapport à l'axe de fléchissement (13), bras (10b) à l'extrémité libre duquel est montée la tête de transfert (7).

23. Procédé de fabrication de blocs gaufrés remplis, qui sont délimités sur leur face supérieure par une feuille gaufrée la plus supérieure et à leur face inférieure par une feuille gaufrée la plus inférieure et entre leurs feuilles gaufrées sont remplies par une masse d'enduction, un bloc préliminaire, non revêtu sur sa face supérieure et inférieure, du bloc gaufré à former et au moins une feuille gaufrée revêtue étant amenés l'un après l'autre, dans le même plan de transport, à un site d'empilage, **caractérisé en ce que** le bloc préliminaire sur le site d'empilage est levé au moins une fois en un déplacement guidé et, avec sa face inférieure non revêtue, est assemblé à la face supérieure revêtue du bloc gaufré revêtu qui est immédiatement le suivant, qui est amené, dans le plan de transport, au site d'empilage pour former un bloc gaufré rempli.

24. Procédé selon la revendication 23, **caractérisé en ce que** le bloc préliminaire est levé en un mouvement guidé, et est assemblé avec la feuille gaufrée enduite, venant immédiatement à la suite, amenée dans le plan de transport pour former un autre bloc préliminaire, **en ce que**, pour chaque autre couche de feuilles gaufrées du bloc gaufré formé, chaque fois le bloc préliminaire formé précédemment est levé en un déplacement guidé et est assemblé à la feuille gaufrée immédiatement la suivante, revêtue, amenée dans le plan de transport pour donner un bloc gaufré rempli.

25. Procédé selon la revendication 23 ou 24, **caractérisé en ce que**, pour l'assemblage du bloc préliminaire et de la feuille gaufrée revêtue, chaque fois le bloc préliminaire, en effectuant un mouvement guidé depuis le haut, est posé sur la feuille gaufrée revêtue et est pressé vers le bas contre celle-ci.

26. Procédé selon la revendication 23 ou 24, **caractérisé en ce que** pour l'assemblage du bloc préliminaire et de la feuille gaufrée revêtue, chaque fois la feuille gaufrée revêtue est levée du plan de transport et est pressée deux piles dessous contre le bloc préliminaire fixé en une position de maintien.

27. Procédé selon l'une des revendications 23 à 26, **caractérisé en ce que** le bloc préliminaire est déplacé de façon synchrone au déplacement de la feuille gaufrée revêtue venant immédiatement ensuite, avant d'être assemblé avec celle-ci pour former un bloc gaufré rempli.

28. Procédé selon- la revendication 27, **caractérisé en ce que** le bloc préliminaire est immobilisé avant d'être assemblé à la feuille gaufrée revêtue pour former un bloc gaufré rempli.

29. Procédé selon la revendication 27, **caractérisé en ce que** le bloc préliminaire est introduit en un mouvement de suivi guidé de la feuille gaufrée enduite immédiatement la suivante, et ensuite est déplacé conjointement de façon synchrone avec la feuille gaufrée revêtue, tandis qu'il est assemblé à celle-ci, pour former un bloc gaufré rempli.

30. Procédé selon la revendication 27, **caractérisé en ce que** la feuille gaufrée revêtue venant immédiatement ensuite est introduite dans un mouvement de suivi du bloc préliminaire et est ensuite déplacée en un mouvement synchrone avec celle-ci, tandis qu'elle est assemblée au bloc préliminaire pour former un bloc gaufré rempli.

31. Procédé selon l'une des revendications 23 à 30, **caractérisé en ce que**, d'abord, hors du site d'empilage, des feuilles gaufrées revêtues et non revêtues sont assemblées par paire pour former des blocs gaufrés à deux couches remplies de masses d'enduction, qui sont amenées au site d'empilage sous forme de blocs préliminaires pour des blocs gaufrés à former.

32. Procédé selon l'unes des revendications 23 à 30, **caractérisé en ce que** l'on amène au site d'empilage des feuilles gaufrées non revêtues, à titre de blocs préliminaires, pour les blocs gaufrés à former.

33. Installation de fabrication de blocs gaufrés remplis, qui sont délimités sur leur face supérieure par une feuille gaufrée la plus supérieure et à leur face inférieure par une feuille gaufrée la plus inférieure et sont remplis d'une masse d'enduction entre leurs feuilles gaufrées, **caractérisée en ce qu'**est prévu un dispositif de transport horizontal (44, 57), qui amène les blocs préliminaires (54) et les feuilles gaufrées (55) enduites, assemblées pour former des blocs gaufrés, dans un plan de transport les uns après les autres au site d'empilage et les blocs gaufrés terminés étant évacués sur le même plan de transport et **en ce que**, au dispositif de transport (44, 57), au site d'empilage, est associé un formateur de blocs (43, 62) formant chaque bloc gaufré en une ou plusieurs phases de formation de blocs gaufrés successives, formateur de blocs qui comporte, sur sa face avant tournée vers le bas, une tête de travail (46, 56) munie d'un dispositif de maintien (47) pour les blocs préliminaire (54), qui est abaissable par rapport au dispositif de transport (44, 57), pour être placé en une position de travail permettant de saisir un bloc préliminaire (54) et, pour les différentes phases de formation de bloc, pour lesquelles le bloc préliminaire fixé par le dispositif de maintien (47) est levé et est assemblé à la feuille gaufrée revêtue venant immédiatement à la suite, pour donner un bloc gaufré rempli, est déplaçable en des déplacements guidés, en des positions de travail associées chacune à une phase de formation de bloc, éloignées d'une distance différente par rapport au dispositif de transport (44, 57).

34. Installation selon la revendication 33, **caractérisée en ce que** le dispositif de maintien (47) de la tête de travail (46, 56) comporte un coussin d'air pouvant être mis en contact avec la face supérieure non revêtue d'un coussin d'air qui est susceptible d'être sollicité par une dépression afin de saisir un bloc préliminaire (54) et est susceptible d'être sollicité par une surpression dans le but d'extraire le bloc gaufré (53) achevé.

35. Installation selon la revendication 33 ou 34, **caractérisée en ce que** la tête de travail (46, 56) comporte une butée avant en saillie sur sa face avant, butée qui fait saillie vers le bas sur le bord avant de la tête de travail (46, 56) sur un bloc préliminaire (54) maintenu par le dispositif de maintien (47) et qui est associé à l'arête avant d'une feuille gaufrée (55) revêtue, placée sur le dispositif de transport (44, 57).

36. Installation selon la revendication 33 ou 34, **caractérisée en ce que** la tête de travail (46, 56) comporte une butée arrière faisant saillie sur sa face avant, qui fait saillie vers le bas sur le bord arrière de la tête de travail (46, 56), sur un bloc préliminaire (54) maintenu par le dispositif de maintien (47) et est associée à l'arête arrière d'une feuille gaufrée (55) revêtue, placée sur le dispositif de transport (44, 57).

37. Installation selon la revendication 33 ou 34, **caractérisée en ce qu'**au-dessous du plan de transport est prévue une table de levage (38, 52) levable et abaissable verticalement, associée à la tête de travail (46, 56), table de levage qui comporte une surface de pose (39) tournée vers le haut parallèle au plan de transport et une butée (40) perpendiculaire au plan de transport, faisant saillie vers le haut au-dessus de la face de pose (39).

38. Installation selon l'une des revendications 33 à 37, **caractérisée en ce que** le formateur de blocs (43) est réalisé sous la forme de robot de manipulation (49) associée au dispositif de transport (44) qui comporte un bras articulé (48) pouvant fléchir autour d'un axe horizontal (51), bras articulé à l'extrémité libre duquel est montée la tête de travail (46).

39. Installation selon la revendication 38, **caractérisée en ce que** le bras articulé (48), portant la tête de travail (46), du robot de manipulation (49) est susceptible de tourner autour d'un axe (50) vertical.

40. Installation selon l'une des revendications 33 à 39, **caractérisée en ce qu'**un tronçon d'installation, placé en amont du formateur de blocs (62), est prévu pour fabriquer des blocs préliminaires remplis, à deux couches, tronçon qui comprend un dispositif de transport supérieur (59) disposé au-dessus du dispositif de transport (57) pour l'amenée des feuilles gaufrées non revêtues, un poste (60) installé à l'aval du dispositif de transport supérieur (59) pour poser les feuilles gaufrées non revêtues sur des feuilles gaufrées individuelles, revêtues, placées sur le dispositif de transport (57), et un dispositif de calibrage (61), qui assemble les feuilles gaufrées, revêtues et non revêtues, pour former des blocs gaufrés remplis, à deux couches.
